# EUROPEAN PATENT APPLICATION

(11) **EP 4 443 428 A1**
(43) Date of publication of application: **09.10.2024**
(21) Application number: 22901428.7
(22) Date of filing: 01.12.2022
(51) Int. Cl.: G10L 17/00, G10L 17/02, G10L 25/63, H04M 3/51, H04M 11/00

(54) **VOICE REGISTRATION DEVICE AND VOICE REGISTRATION METHOD**

(30) Priority: 03.12.2021 JP 2021197226
(71) Applicant: Panasonic Intellectual Property Management Co., Ltd., Kadoma-shi, Osaka 571-0057 (JP)
(72) Inventor: FUKUDA, Teppei, Osaka 571-0057 (JP); OKADA, Shintaro, Osaka 571-0057 (JP); MIYAMOTO, Masanari, Osaka 571-0057 (JP)
(74) Representative: Eisenführ Speiser
(86) International application number: PCT/JP2022/044486
(87) International publication number: WO 2023/100998

(57) **Abstract**

This voice registration device comprises an acquisition unit for acquiring a voice signal of the spoken voice of a speaker, an emotion identification unit for identifying at least one emotion of the speaker included in the voice signal, and a registration unit for registering a voice signal for each emotion in a database on the basis of a result of identification by the emotion identification unit.

## Description

### TECHNICAL FIELD

The present disclosure relates to a voice registration device and a voice registration method.

### BACKGROUND ART

Patent Literature 1 discloses a communication device that stores, in a case where it is determined that a total acquisition time length of a telephone number in a telephone directory and at least one piece of voiceprint data corresponding to a telephone number identical to an acquired telephone number is longer than a time required for voiceprint verification, the acquired telephone number and the voiceprint data in an associated manner. The communication device acquires a received voice, extracts voiceprint data from the acquired received voice, measures an acquisition time of the received voice, and stores, in a case where the acquired telephone number is in the telephone directory, the acquired telephone number and the extracted voiceprint data in an associated manner.

### CITATION LIST

### PATENT LITERATURE

Patent Literature 1: JP2016-53598A

### SUMMARY OF INVENTION

### TECHNICAL PROBLEM

Patent Literature 1 discloses a communication device that stores, in a case where it is determined that a total acquisition time length of a telephone number in a telephone directory and at least one piece of voiceprint data corresponding to a telephone number identical to an acquired telephone number is longer than a time required for voiceprint verification, the acquired telephone number and the voiceprint data in an associated manner. However, in the above-described communication device, since one or more pieces of voiceprint data to be used for the voiceprint verification are collectively stored for each speaker, when the voiceprint verification is executed using a received voice in a case where emotion of the speaker is agitated or the like, there is a possibility that a variation is generated in personality of the speaker included in the voiceprint data due to the emotion, and accuracy of the voiceprint verification of the speaker is reduced.

The present disclosure has been made in view of the above situation in the related art, and an object thereof is to provide an utterance voice registration device and an utterance voice registration method for collecting an utterance voice for further improving authentication accuracy of voice authentication using an utterance voice.

### SOLUTION TO PROBLEM

The present disclosure provides a voice registration device including: an acquisition unit configured to acquire a voice signal of an utterance voice of a speaker, an emotion identification unit configured to identify at least one type of emotion of the speaker included in the voice signal, and a registration unit configured to register a voice signal for the each type of emotion in a database based on an identification result by the emotion identification unit.

In addition, the present disclosure provides a voice registration method executed by one or more computers, the voice registration method including: acquiring a voice signal of an utterance voice of a speaker; identifying at least one type of emotion of the speaker included in the voice signal; and registering a voice signal for the each type of emotion in a database based on an identification result of the emotion.

### ADVANTAGEOUS EFFECTS OF INVENTION

According to the present disclosure, it is possible to collect an utterance voice for further improving authentication accuracy of voice authentication using an utterance voice.

### BRIEF DESCRIPTION OF DRAWINGS

Fig. 1 is a diagram illustrating an example of a use case of a voice authentication system according to Embodiment 1.
Fig. 2 is a block diagram illustrating an example of an internal configuration of an authentication analysis device according to Embodiment 1.
Fig. 3 is a diagram illustrating an example of emotion identification processing according to Embodiment 1.
Fig. 4 is a diagram illustrating an example of registration of an utterance voice signal.
Fig. 5 is a diagram illustrating an example of a communication between an operator and a user.
Fig. 6 is a diagram illustrating an example of utterance rate conversion processing.
Fig. 7 is a flowchart illustrating an example of voice registration processing according to Embodiment 1.
Fig. 8 is a flowchart illustrating an example of the voice registration processing according to Embodiment 1.
Fig. 9 is a diagram illustrating an example of a progress notification screen of a new user.
Fig. 10 is a diagram illustrating an example of a progress notification screen of an already registered user.
Fig. 11 is a diagram illustrating an example of a progress notification screen of the already registered user.
Fig. 12 is a block diagram illustrating an example of an internal configuration of an authentication analysis device according to Embodiment 2.
Fig. 13 is a diagram illustrating an example of speaker switching identification processing.
Fig. 14 is a diagram illustrating an example of emotion identification processing according to Embodiment 2.
Fig. 15 is a flowchart illustrating an example of voice registration processing according to Embodiment 2.
Fig. 16 is a flowchart illustrating an example of the voice registration processing according to Embodiment 2.
Fig. 17 is a block diagram illustrating an example of an internal configuration of an authentication analysis device according to Embodiment 3.
Fig. 18 is a diagram illustrating an example of progress degree determination processing according to Embodiment 3.
Fig. 19 is a flowchart illustrating an example of an operation procedure of the authentication analysis device in Embodiment 3.
Fig. 20 is a diagram illustrating an example of a question example screen.
Fig. 21 is a diagram illustrating an example of a progress notification screen of a user.
Fig. 22 is a diagram illustrating an example of the progress notification screen of a user.

### DESCRIPTION OF EMBODIMENTS

### (Background of Embodiment 1)

Patent Literature 1 discloses a communication device that stores, in a case where it is determined that a total acquisition time length of a telephone number in a telephone directory and at least one piece of voiceprint data corresponding to a telephone number identical to an acquired telephone number is longer than a time required for voiceprint verification, the acquired telephone number and the voiceprint data in an associated manner. However, in the above-described communication device, since one or more pieces of voiceprint data to be used for the voiceprint verification are collectively stored for each speaker, when the voiceprint verification is executed using a received voice in a case where emotion of the speaker is agitated or the like, there is a possibility that a variation is generated in personality of the speaker included in the voiceprint data due to the emotion, and accuracy of the voiceprint verification of the speaker is reduced.

Hereinafter, the embodiments specifically disclosing the voice registration device and the voice registration method according to the present disclosure will be described in detail with reference to the drawings as appropriate. However, unnecessarily detailed descriptions may be omitted. For example, detailed description of already well-known matters and redundant description of substantially the same configuration may be omitted. This is to avoid unnecessary redundancy of the following description and to facilitate understanding of those skilled in the art. The accompanying drawings and the following description are provided for those skilled in the art to fully understand the present disclosure and are not intended to limit the subject matters described in the claims.

### (Embodiment 1)

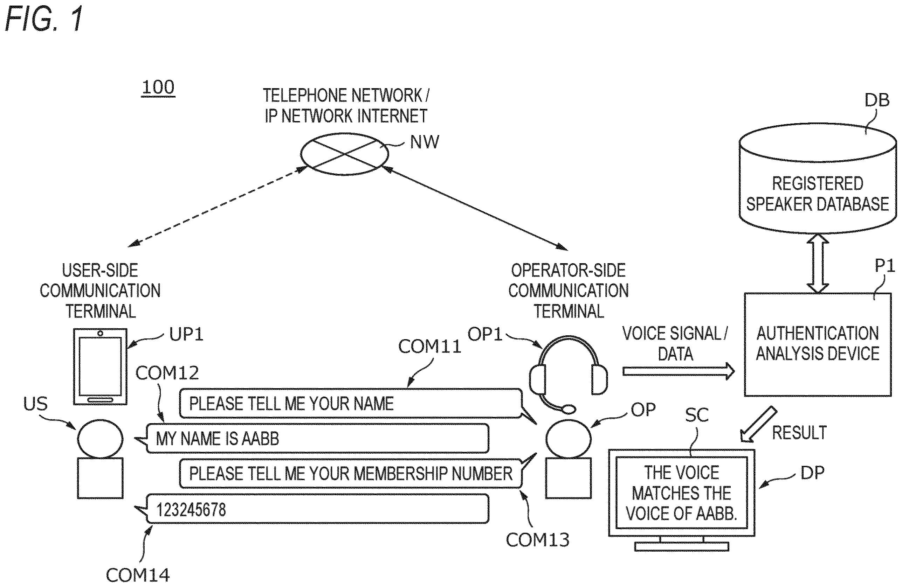

First, a use case of a voice authentication system 100 according to Embodiment 1 will be described with reference to Fig. 1. Fig. 1 is a diagram illustrating an example of the use case of the voice authentication system 100 according to Embodiment 1.

The voice authentication system 100 acquires a voice signal or voice data of a person (a user US in the example illustrated in Fig. 1) who is a voice authentication target, and registers (stores) the acquired voice signal or voice data in a storage (a registered speaker database DB in the example illustrated in Fig. 1) for each user US.

In addition, the voice authentication system 100 acquires the voice signal or the voice data of the person (the user US in the example illustrated in FIG. 1) who is a voice authentication target, and verifies the acquired voice signal or voice data with a plurality of voice signals or a plurality of pieces of voice data registered (stored) in advance in the storage (the registered speaker database DB in the example illustrated in FIG. 1). The voice authentication system 100 evaluates similarity between the user who is a voice authentication target and the voice signal or the voice data registered in the storage based on a verification result, and verifies the user US based on the evaluated similarity.

The voice authentication system 100 according to Embodiment 1 includes at least an operator-side communication terminal OP1, an authentication analysis device P1, the registered speaker database DB, and an information display unit DP. The authentication analysis device P1 and the registered speaker database DB may be integrated with each other. Similarly, the authentication analysis device P1 and the information display unit DP may be integrated with each other.

The voice authentication system 100 illustrated in FIG. 1 is an example that is used for authentication of a speaker (the user US) in a call center, and executes the authentication of the user US using the voice data obtained by collecting an utterance voice of the user US who is communicating with an operator OP. The voice authentication system 100 illustrated in FIG. 1 further includes a user-side communication terminal UP1 and a network NW. The overall configuration of the voice authentication system 100 is not limited to the example illustrated in FIG. 1 as a matter of course.

The user-side communication terminal UP1 is connected to the operator-side communication terminal OP1 via the network NW so as to be able to execute wireless communication. Here, the wireless communication is, for example, communication via a wireless local area network (LAN) such as Wi-Fi (registered trademark).

The user-side communication terminal UP1 is implemented by, for example, a notebook PC, a tablet terminal, a smartphone, and a telephone. The user-side communication terminal UP1 is a voice collecting device including a microphone (not illustrated), collects an utterance voice of the user US and converts the utterance voice into a voice signal, and transmits the converted voice signal via the network NW to the operator-side communication terminal OP1. In addition, the user-side communication terminal UP1 acquires a voice signal of an utterance voice of the operator OP transmitted from the operator-side communication terminal OP1 and outputs the voice signal from a speaker (not illustrated).

The network NW is an IP network or a telephone network, and connects the user-side communication terminal UP1 and the operator-side communication terminal OP1 so as to be able to transmit and receive voice signals. The transmission and reception of data are executed by wired communication or wireless communication. Here, the wireless communication is, for example, communication via the wireless LAN such as Wi-Fi (registered trademark).

The operator-side communication terminal OP1 is connected between the user-side communication terminal UP1 and the authentication analysis device P1 so as to be able to transmit and receive data by wired communication or wireless communication, and transmits and receives voice signals.

The operator-side communication terminal OP1 is implemented by, for example, a notebook PC, a tablet terminal, a smartphone, and a telephone. The operator-side communication terminal OP1 acquires a voice signal based on the utterance voice of the user US transmitted from the user-side communication terminal UP1 via the network NW, and transmits the voice signal to the authentication analysis device P1. In a case where the operator-side communication terminal OP1 acquires voice signals including the acquired utterance voice of the user US and the acquired utterance voice of the operator OP, the operator-side communication terminal OP1 may separate the voice signal based on the utterance voice of the user US and the voice signal based on the utterance voice of the operator OP, on the basis of voice parameters such as a sound pressure level and a frequency band of the voice signals of the operator-side communication terminal OP1. The operator-side communication terminal OP1 extracts only the voice signal based on the utterance voice of the user US after the separation and transmits the extracted voice signal to the authentication analysis device P1.

The operator-side communication terminal OP1 may be connected to each of a plurality of user-side communication terminals so as to be able to execute communicate, and may simultaneously acquire a voice signal from each of the plurality of user-side communication terminals. The operator-side communication terminal OP1 transmits the acquired voice signal to the authentication analysis device P1. Accordingly, the voice authentication system 100 can execute voice authentication processing and voice analysis processing of each of a plurality of users at the same time.

In addition, the operator-side communication terminal OP1 may acquire a voice signal including an utterance voice of each of the plurality of users at the same time. The operator-side communication terminal OP1 extracts the voice signal for each user from the voice signals of the plurality of users acquired via the network NW, and transmits the voice signal for each user to the authentication analysis device P1. In such a case, the operator-side communication terminal OP1 may analyze the voice signals of the plurality of users, and separate and extract the voice signal for each user based on voice parameters such as a sound pressure level and a frequency band. In a case where the voice signal is collected by an array microphone or the like, the operator-side communication terminal OP1 may separate and extract the voice signal for each user based on an arrival direction of the utterance voice. Accordingly, even when voice signals are collected in an environment in which a plurality of users utter at the same time, such as a Web conference, the voice authentication system 100 can execute voice authentication processing and voice analysis processing for each of the plurality of users.

The authentication analysis device P1, which is an example of a computer, is connected to the operator-side communication terminal OP1, the registered speaker database DB, and the information display unit DP so as to be able to transmit and receive data. The authentication analysis device P1 may be connected to the operator-side communication terminal OP1, the registered speaker database DB, and the information display unit DP via a network (not illustrated) so as to be able to execute wired communication or wireless communication.

The authentication analysis device P1 acquires the voice signal of the user US transmitted from the operator-side communication terminal OP1, and detects an utterance section during which the user US is uttering based on the acquired voice signal. The authentication analysis device P1 identifies emotion of the user US included in the voice signal (hereinafter, referred to as an "utterance voice signal") of each detected utterance section, and extracts the utterance voice signal for each identified type of emotion. The authentication analysis device P1 registers (stores) the extracted utterance voice signal for each type of emotion and a telephone number of the user-side communication terminal UP1 in an associated manner in the registered speaker database DB.

In a case where it is determined that the telephone number of the user-side communication terminal UP1 is a telephone number already registered in the registered speaker database DB, the authentication analysis device P1 updates the utterance voice signal associated with the telephone number to an acquired new utterance voice signal. In addition, in a case where it is determined that the telephone number of the user-side communication terminal UP1 is not a telephone number already registered in the registered speaker database DB, the authentication analysis device P1 registers the telephone number and the acquired utterance voice signal for each type of emotion in an associated manner.

In Embodiment 1, an example in which a telephone number is used for identification processing of the user-side communication terminal UP1 (that is, the user US) is exemplified, but for example, in a case where the user-side communication terminal UP1 is implemented by a PC, a notebook PC, a tablet terminal, or the like, or the user US and the operator OP communicate using a Web conference system, an Internet protocol (IP) address or the like of the user-side communication terminal UP1 may be used instead of the telephone number.

The authentication analysis device P1 acquires the utterance voice signal of the user US transmitted from the operator-side communication terminal OP1, executes voice analysis for each frequency, for example, and extracts an utterance feature amount of an individual user US. The authentication analysis device P1 refers to the registered speaker database DB and verifies an utterance feature amount of each of a plurality of users registered in advance in the registered speaker database DB with the extracted utterance feature amount, thereby executing voice authentication of the user US. The authentication analysis device P1 generates an authentication result screen SC including a user authentication result and transmits the authentication result screen SC to the information display unit DP for output. The authentication result screen SC illustrated in FIG. 1 is an example, and is not limited thereto as a matter of course. The authentication result screen SC illustrated in FIG. 1 includes a message that "The voice matches the voice of AABB.", which is the user authentication result.

The registered speaker database DB as an example of a database is a so-called storage, and is implemented using a storage medium such as a flash memory, a hard disk drive (HDD), or a solid state drive (SSD). The registered speaker database DB stores (registers) user information and the utterance feature amounts of the plurality of users in an associated manner. Here, the user information is information related to the user, and is, for example, a user name, a user identification (ID), and identification information assigned to each user. The registered speaker database DB may be integrated with the authentication analysis device P1. The registered speaker database DB registers (stores) the utterance voice signal for each type of emotion of the user US and the telephone number of the user US in an associated manner in each of a first emotion database DB1, a second emotion database DB2, ..., and an Nth emotion database DBN (N is an integer of 1 or more) corresponding to the emotion of the utterance voice signal. The number of emotion databases in the registered speaker database DB may be one or more.

The information display unit DP is implemented by, for example, a liquid crystal display (LCD) or an organic electroluminescence (EL) display, and displays the authentication result screen SC transmitted from the authentication analysis device P1.

In the example illustrated in FIG. 1, the user-side communication terminal UP1 collects an utterance voice COM12 that "My name is AABB" of the user US and an utterance voice COM14 of "123245678" of the user US, converts the collected utterance voices into utterance voice signals, and transmits the utterance voice signals to the operator-side communication terminal OP1. The operator-side communication terminal OP1 transmits the utterance voice signal based on each of the utterance voices COM12 and COM14 of the user US transmitted from the user-side communication terminal UP1 to the authentication analysis device P1.

In a case where the operator-side communication terminal OP1 acquires voice signals obtained by collecting an utterance voice COM11 that "Please tell me your name", and an utterance voice COM13 that "Please tell me your membership number" of the operator OP, and the utterance voices COM12 and COM14 of the user US, the operator-side communication terminal OP1 separates and removes a voice signal based on each of the utterance voices COM11 and COM13 of the operator OP, extracts only the voice signal based on each of the utterance voices COM12 and COM14 of the user US, and transmits the voice signal to the authentication analysis device P1. Accordingly, the authentication analysis device P1 can improve user authentication accuracy by using only a voice signal of a person who is a voice authentication target.

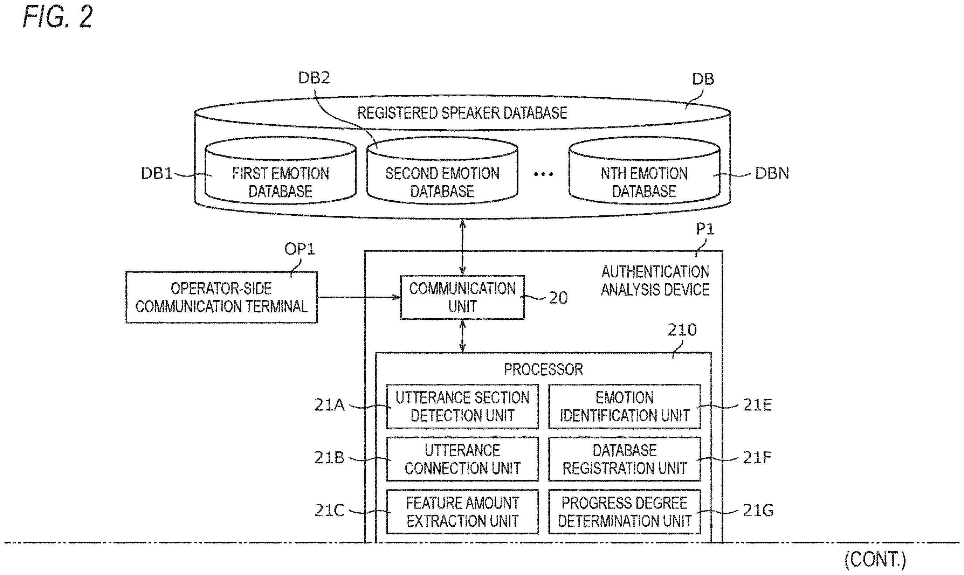

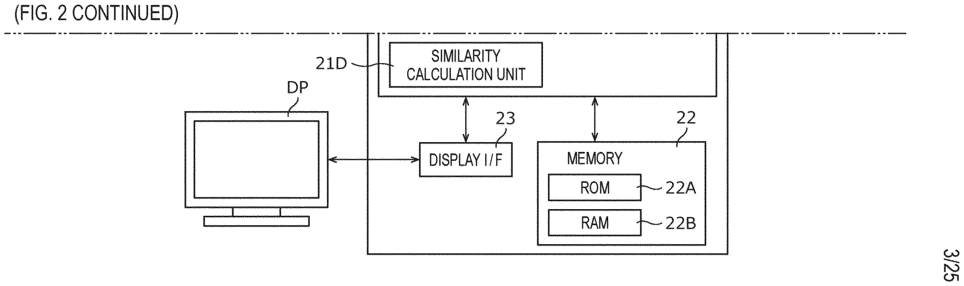

An example of an internal configuration of the authentication analysis device P1 will be described with reference to FIG. 2. FIG. 2 is a block diagram illustrating the example of the internal configuration of the authentication analysis device P1 according to Embodiment 1. The authentication analysis device P1 includes at least a communication unit 20, a processor 210, and a memory 22.

The communication unit 20, which is an example of an acquisition unit, is connected to each of the operator-side communication terminal OP1 and the registered speaker database DB so as to be able to execute data communication. The communication unit 20 outputs a voice signal transmitted from the operator-side communication terminal OP1 to the processor 210.

The processor 210 is implemented using a semi-conductor chip on which at least one of electronic devices such as a central processing unit (CPU), a digital signal processor (DSP), a graphical processing unit (GPU), and a field programmable gate array (FPGA) is mounted. The processor 210 functions as a controller that controls the overall operation of the authentication analysis device P1, and executes control processing for controlling operations of respective units of the authentication analysis device P1, data input and output processing between respective units of the authentication analysis device P1, data calculation processing, and data storage processing.

The processor 210 uses programs and data stored in a read only memory (ROM) 22A of the memory 22 to implement functions of an utterance section detection unit 21A, an utterance connection unit 21B, a feature amount extraction unit 21C, a similarity calculation unit 21D, an emotion identification unit 21E, a database registration unit 21F, and a progress degree determination unit 21G. The processor 210 uses a random access memory (RAM) 22B of the memory 22 during operation to temporarily store, in the RAM 22B of the memory 22, data or information generated or acquired by the processor 210 and each unit.

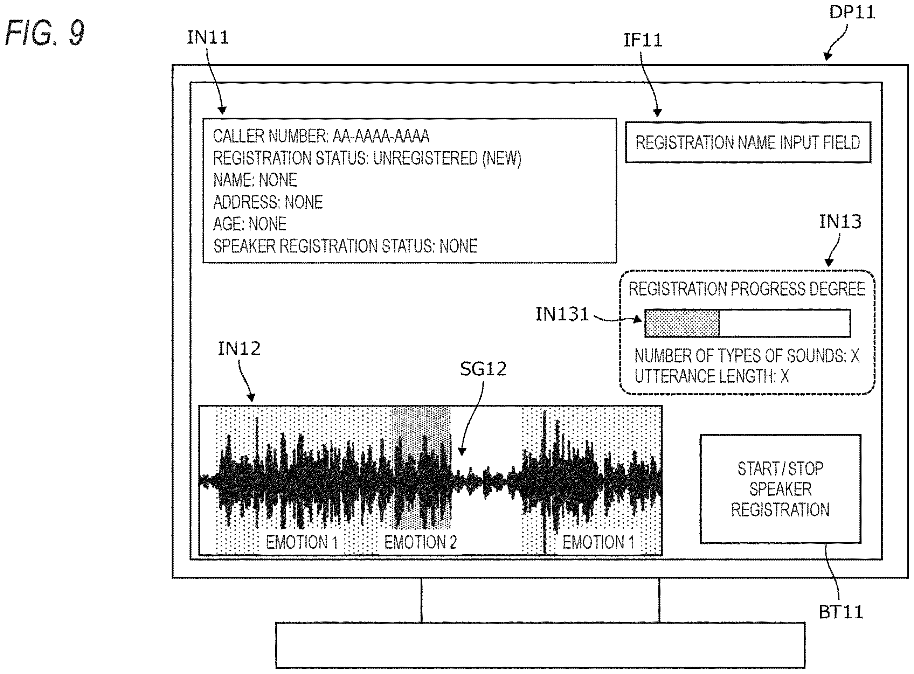

The processor 210 acquires a telephone number (a caller number) of the user-side communication terminal UP1, verifies the acquired telephone number with telephone numbers of a plurality of user-side communication terminals registered in the registered speaker database DB, and specifies the user-side communication terminal UP1 (that is, the user US). In a case where the user-side communication terminal UP1 is specified, the processor 210 executes update processing of the utterance voice signal (in other words, registration processing of a new utterance voice signal) registered in the registered speaker database DB and used for user authentication of the user US who is the owner of the user-side communication terminal UP1, and in a case where the user US cannot be specified, the processor 210 executes new registration processing of the telephone number of the user US and the utterance voice signal used for the user authentication. The processor 210 generates progress notification screens DP11, DP12A, and DP12B (see Figs. 9 to 11) for notifying the operator OP of a progress state of the registration processing of the utterance voice signal, and outputs the progress notification screens DP11, DP12A, and DP12B to the information display unit DP.

The utterance section detection unit 21A analyzes the acquired voice signal and detects an utterance section during which the user US is uttering. The utterance section detection unit 21A outputs an utterance voice signal corresponding to each utterance section detected based on the voice signal to the utterance connection unit 21B or the feature amount extraction unit 21C. In addition, the utterance section detection unit 21A may temporarily store the utterance voice signal of each utterance section in the RAM 22B of the memory 22.

In a case where two or more utterance sections of the same person (the user US) are detected by the utterance section detection unit 21A based on the utterance voice signal, the utterance connection unit 21B connects utterance voice signals of these utterance sections. The utterance connection unit 21B outputs the connected utterance voice signals to the feature amount extraction unit 21C. A user authentication method will be described later.

The feature amount extraction unit 21C analyzes a feature of an individual voice for, for example, each frequency using one or more utterance voice signals extracted by the utterance section detection unit 21A, and extracts an utterance feature amount. The feature amount extraction unit 21C may extract an utterance feature amount of the utterance voice signal output from the utterance connection unit 21B. The feature amount extraction unit 21C outputs the extracted utterance feature amount and the utterance voice signal from which the utterance feature amount is extracted in an associated manner to the similarity calculation unit 21D, or temporarily stores the utterance feature amount and the utterance voice signal in the RAM 22B of the memory 22.

The similarity calculation unit 21D acquires the utterance feature amount of the utterance voice signal output from the feature amount extraction unit 21C. The similarity calculation unit 21D refers to the registered speaker database DB and calculates similarity between the utterance feature amount of each of the plurality of users registered in the registered speaker database DB and the acquired utterance feature amount after the connection. The similarity calculation unit 21D specifies a user corresponding to the utterance voice signal based on the calculated similarity and executes user authentication.

In a case where it is determined that the user is specified as a result of the user authentication, the similarity calculation unit 21D generates an authentication result screen SC including information related to the specified user (that is, an authentication result) and outputs the authentication result screen SC to the information display unit DP via a display interface (I/F) 23.

In a case where it is determined that the calculated similarity is less than a predetermined value, the similarity calculation unit 21D may determine that the user authentication is impossible, and generate and output a control command of requesting the utterance connection unit 21B to connect the utterance voice signals. Further, in a case where an upper limit number of times is set to the number of times of user authentication in the user authentication for the same person (the user US) and it is determined that the number of times it has been determined that the user authentication is impossible is equal to or greater than the upper limit number of times, the similarity calculation unit 21D may generate an authentication result screen (not illustrated) for notifying that the user authentication is impossible and output the authentication result screen to the information display unit DP.

The emotion identification unit 21E analyzes an utterance voice signal detected by the utterance section detection unit 21A using an emotion model stored in the memory 22, and identifies emotion (for example, normal, angry, excited, nervous, depressed, or the like) of the user US corresponding to the utterance voice signal. The emotion identification unit 21E combines an utterance voice signal with each identified type of emotion and outputs the utterance voice signal to the database registration unit 21F. The emotion identification unit 21E may be configured separately from the authentication analysis device P1.

The database registration unit 21F registers (stores) the telephone number of the user-side communication terminal UP1 and the utterance voice signal for each type of emotion output from the emotion identification unit 21E in an associated manner in, among the registered speaker database DB, each of the first emotion database DB1, the second emotion database DB2, ..., and the Nth emotion database DBN corresponding to each type of emotion.

The progress degree determination unit 21G determines a progress degree of registration processing of the utterance voice signal registered in the registered speaker database DB by the database registration unit 21F. Here, the progress degree of the registration processing is a current ratio (a progress degree) of registration processing such as a sound type and an utterance length of the utterance voice signal of the user US registered in the registered speaker database DB to a registration target data amount such as the number of sound types and an utterance length (in other words, a length of the utterance voice signal) necessary for the user authentication using the utterance voice signal.

The memory 22 includes at least the ROM 22A that stores, for example, a program that defines various kinds of processing executed by the processor 210 and data used during execution of the program, and the RAM 22B serving as a work memory used when various kinds of processing executed by the processor 210 are executed. In the ROM 22A, the program that defines various kinds of processing executed by the processor 210 and the data used during execution of the program are written. The RAM 22B temporarily stores data or information (for example, an utterance voice signal before the connection, an utterance voice signal after the connection, an utterance feature amount corresponding to each utterance section before the connection or after the connection, and the like) generated or acquired by the processor 210.

The display I/F 23 connects the processor 210 and the information display unit DP so as to be able to execute data communication, and outputs the authentication result screen SC generated by the similarity calculation unit 21D of the processor 210 to the information display unit DP.

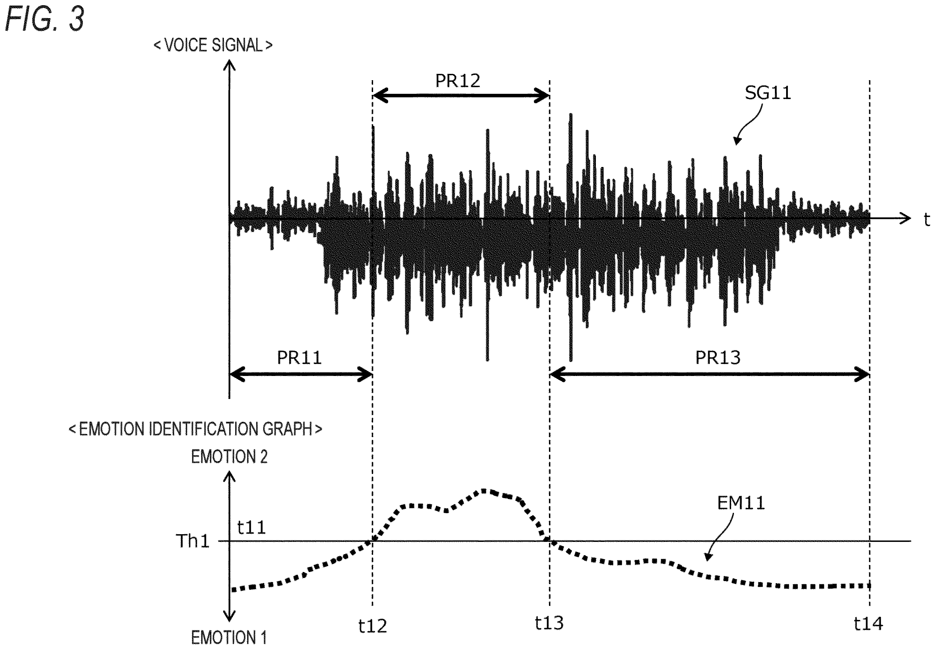

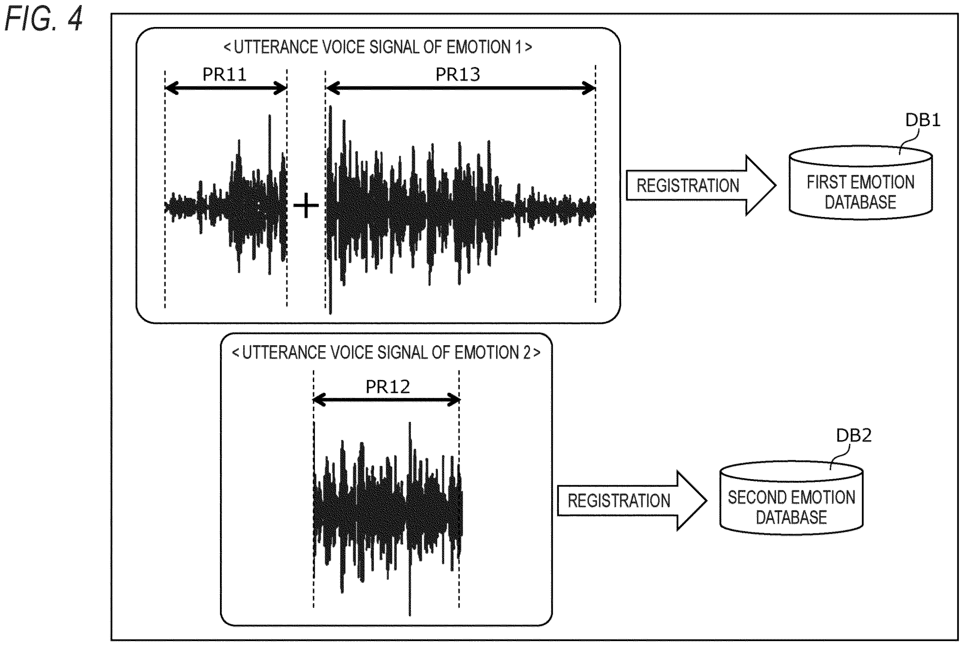

Next, emotion identification processing and an utterance voice signal registration processing executed by the authentication analysis device P1 will be described with reference to Figs. 3 and 4. Fig. 3 is a diagram illustrating an example of the emotion identification processing according to Embodiment 1. Fig. 4 is a diagram illustrating an example of registration of an utterance voice signal. A method for the emotion identification processing described with reference to Figs. 3 and 4 may be executed in the same manner also in the emotion identification unit 21E according to Embodiment 2.

In the emotion identification processing described with reference to Figs. 3 and 4, an example in which each of two types of emotion of "emotion 1" and "emotion 2" is identified based on the utterance voice signal is exemplified, but the number of types of emotion that can be identified may be one or more. In addition, the "emotion 1" corresponds to the emotion of the utterance voice signal registered (stored) in the first emotion database DB1. The "emotion 2" corresponds to the emotion of the utterance voice signal registered (stored) in the second emotion database DB2.

The emotion identification unit 21E extracts a section (a time zone) of the utterance voice signal including each type of emotion of the "emotion 1" and the "emotion 2" corresponding to each emotion database included in the registered speaker database DB.

In the example illustrated in Fig. 3, the emotion identification unit 21E analyzes the emotion of the user US included in the utterance voice signal, and identifies emotion of the utterance voice signal equal to or greater than a threshold value Th1 as the "emotion 2" and emotion of the utterance voice signal less than the threshold value Th1 as the "emotion 1", respectively. The emotion identification unit 21E identifies an utterance voice signal in a time zone PR11 from a time t11 to a time 112 and an utterance voice signal in a time zone PR13 from a time t13 to a time t14 as the "emotion 1", and identifies an utterance voice signal in a time zone PR12 from a time t12 to a time t13 as the "emotion 2", respectively. The emotion identification unit 21E combines the utterance voice signal in the time zone PR11 and the utterance voice signal in the time zone PR13.

The database registration unit 21F registers (stores) the utterance voice signals of the time zone PR11 and the time zone PR13 identified as the "emotion 1" and the telephone number of the user US in an associated manner in the first emotion database DB1, and registers (stores) the utterance voice signal of the time zone PR12 identified as the "emotion 2" and the telephone number of the user US in an associated manner in the second emotion database DB2. Here, in a case where it is determined that there is an already registered utterance voice signal in the first emotion database DB1 or the second emotion database DB2, the database registration unit 21F overwrites (updates) the already registered utterance voice signal to a new utterance voice signal output from the emotion identification unit 21E.

As a result, the authentication analysis device P1 according to Embodiment 1 can classify utterance voice signals of the user US for each type of emotion and register (store) the utterance voice signals in the registered speaker database DB. Accordingly, in the authentication analysis device P1, even in a case where a variation is generated in the personality of the speaker included in the utterance voice signal due to the emotion of the user US during a communication, a decrease in user authentication accuracy can be more effectively prevented by using an utterance voice signal identified to be similar to or identical to the emotion included in the acquired utterance voice signal in the user authentication processing using the registered utterance voice signal.

Accordingly, the authentication analysis device P1 overwrites (updates) the utterance voice signal registered (stored) in each emotion database to a newly acquired utterance voice signal, thereby improving the user authentication accuracy through the user authentication processing using an utterance voice signal that includes the latest individual personality, and more efficiently preventing occurrence of an available capacity shortage in the registered speaker database DB.

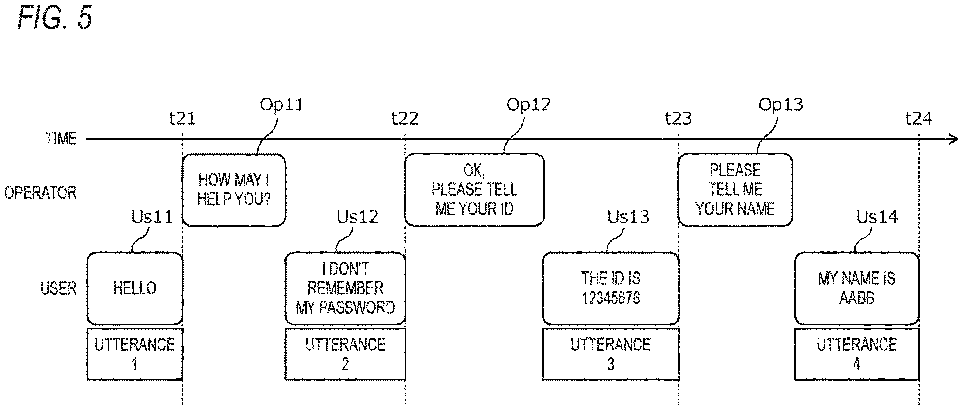

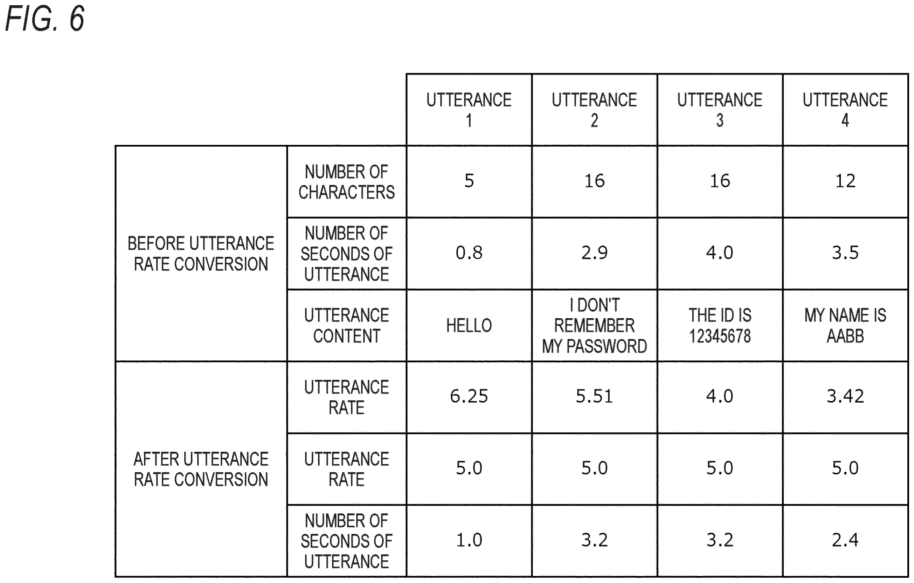

Next, utterance rate conversion processing executed by the authentication analysis device P1 will be described with reference to Figs. 5 and 6. Fig. 5 is a diagram illustrating an example of a communication between the operator OP and the user US. Fig. 6 is a diagram illustrating an example of the utterance rate conversion processing. The example of the utterance rate conversion processing illustrated in Fig. 6 is an example and is not limited thereto.

The user-side communication terminal UP1 collects an utterance voice Us11 of "Hello", an utterance voice Us12 that "I don't remember my password", an utterance voice Us13 that "The ID is 12345678", and an utterance voice Us14 that "My name is AABB" of the user US, converts the collected utterance voices into voice signals, and transmits the voice signals to the operator-side communication terminal OP1.

The operator-side communication terminal OP1 collects an utterance voice Op11 that "How may I help you?", an utterance voice Op12 that "OK, please tell me your ID", and an utterance voice Op13 that "Please tell me your name" of the operator OP, converts the utterance voices into voice signals, and transmits the voice signals to the user-side communication terminal UP1. In addition, the operator-side communication terminal OP1 acquires the voice signals transmitted from the user-side communication terminal UP1 and transmits the voice signals to the authentication analysis device P1.

The utterance section detection unit 21A in the authentication analysis device P1 detects an utterance section of each of the utterance voices Us11 to Us14 of the user US based on the voice signals transmitted from the operator-side communication terminal OP1. The utterance section detection unit 21A extracts an utterance voice signal corresponding to each detected utterance section. In Fig. 6, the utterance voice signal corresponding to the utterance voice Us11 illustrated in Fig. 5 is referred to as an "utterance 1", the utterance voice signal corresponding to the utterance voice Us12 illustrated in Fig. 5 is referred to as an "utterance 2", the utterance voice signal corresponding to the utterance voice Us13 illustrated in Fig. 5 is referred to as an "utterance 3", and the utterance voice signal corresponding to the utterance voice Us14 illustrated in Fig. 5 is referred to as an "utterance 4".

The utterance section detection unit 21A converts an utterance rate of the utterance voice signal by reducing or expanding the utterance voice signal such that the utterance rate of the utterance voice signal in the detected utterance section becomes a predetermined utterance rate (for example, an utterance rate = 5.0 characters/second as illustrated in Fig. 6). Accordingly, the authentication analysis device P1 can more accurately calculate the similarity between the utterance feature amount of the utterance voice signal used for the user authentication and the utterance feature amount of each user registered in the registered speaker database DB, and thus the user authentication accuracy can be further improved.

Hereinafter, an example of utterance rate conversion processing of each of the utterance voice signals "utterance 1" to "utterance 4" of the user US will be specifically described with reference to Fig. 6.

For example, the utterance section detection unit 21A executes voice analysis on the utterance voice signal of the user US used for registration (storage) in the registered speaker database DB, and calculates each of the number of characters included in the utterance voice signal, a signal length (the number of seconds of utterance) of the utterance voice signal, and the utterance rate of the utterance voice signal.

Regarding the utterance voice signal "utterance 1", the number of characters = 5 characters, the number of seconds of utterance (that is, the utterance section) = 0.8 seconds, and the utterance rate = 6.25 characters/second. Similarly, regarding the utterance voice signal "utterance 2", the number of characters = 16 characters, the number of seconds of utterance = 2.9 seconds, and the utterance rate = 5.51 characters/second. Regarding the utterance voice signal "utterance 3", the number of characters = 16 characters, the number of seconds of utterance = 4.0 seconds, and the utterance rate = 4.0 characters/second. Further, regarding the utterance voice signal "utterance 4", the number of characters = 12 characters, the number of seconds of utterance = 3.5 seconds, and the utterance rate = 3.42 characters/second.

In such a case, the utterance section detection unit 21A executes utterance rate conversion on the utterance voice signal "utterance 1" to satisfy that the number of seconds of utterance = 1.0 second and the utterance rate = 5.0 characters/second, executes utterance rate conversion on the utterance voice signal "utterance 2" to satisfy that the number of seconds of utterance = 3.2 seconds and the utterance rate = 5.0 characters/second, executes utterance rate conversion on the utterance voice signal "utterance 3" to satisfy that the number of seconds of utterance = 3.2 seconds and the utterance rate = 5.0 characters/second, and executes utterance rate conversion on the utterance voice signal "utterance 4" to satisfy that the number of seconds of utterance = 2.4 seconds and the utterance rate = 5.0 characters/second.

The utterance rate of the utterance voice signal may be calculated based on the number of characters and the number of seconds of utterance acquired based on a voice recognition result of the utterance voice signal, or may be estimated based on the number of morae, the number of syllables, or the number of sound types and the number of seconds of utterance. In addition, the utterance rate of the utterance voice signal may be directly estimated by calculation processing based on a time component and a frequency component of the voice signal.

As described above, the authentication analysis device P1 according to Embodiment 1 executes the emotion identification processing of the user US included in the utterance voice signal, the registration processing of the utterance voice signal in the registered speaker database DB, and the like using an utterance voice signal converted to have a predetermined utterance rate, thereby realizing registration of the utterance voice signal sufficiently including the personality necessary for the user authentication processing for each type of emotion. Accordingly, the authentication analysis device P1 can improve the user authentication accuracy in a user authentication processing.

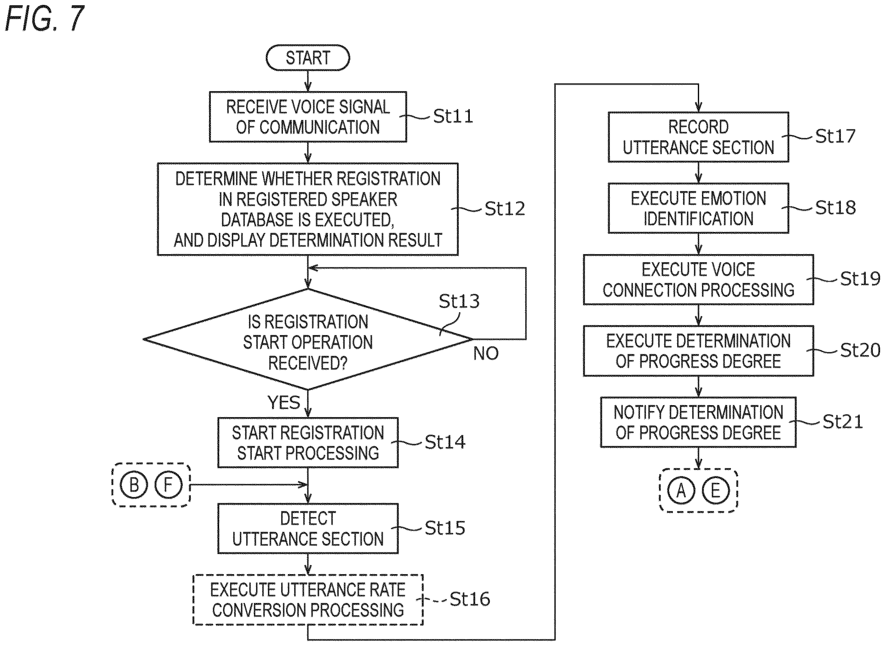

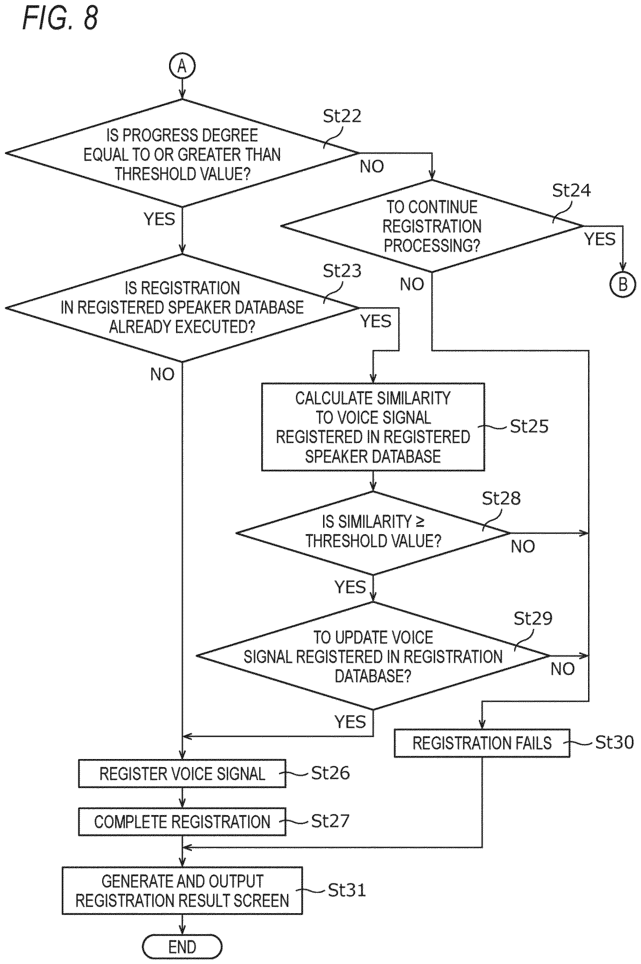

Next, examples of an operation procedure of the authentication analysis device P1 will be described with reference to Figs. 7 and 8, and Fig. 7 is a flowchart illustrating the example of the operation procedure of the authentication analysis device P1 according to Embodiment 1. Fig. 8 is a flowchart illustrating the example of the operation procedure of the authentication analysis device P1 according to Embodiment 1.

The communication unit 20 in the authentication analysis device P1 acquires a voice signal (or voice data) of a communication with the user-side communication terminal UP1 transmitted from the operator-side communication terminal OP1 (St11). The communication unit 20 outputs the acquired voice signal to the processor 210. In addition, the communication unit 20 acquires a telephone number of the user-side communication terminal UP1 transmitted from the operator-side communication terminal OP1 and outputs the telephone number to the processor 210 (St12). Here, the telephone number may be an IP address or the like of the user-side communication terminal UP1.

The processor 210 verifies the telephone number of the user-side communication terminal UP1 output from the communication unit 20 with each of telephone numbers of a plurality of user-side communication terminals registered (stored) in the registered speaker database DB, determines whether the telephone number of the user-side communication terminal UP1 is already registered in the registered speaker database DB, generates a progress notification screen including a determination result, and outputs the progress notification screen to the information display unit DP for display (St12).

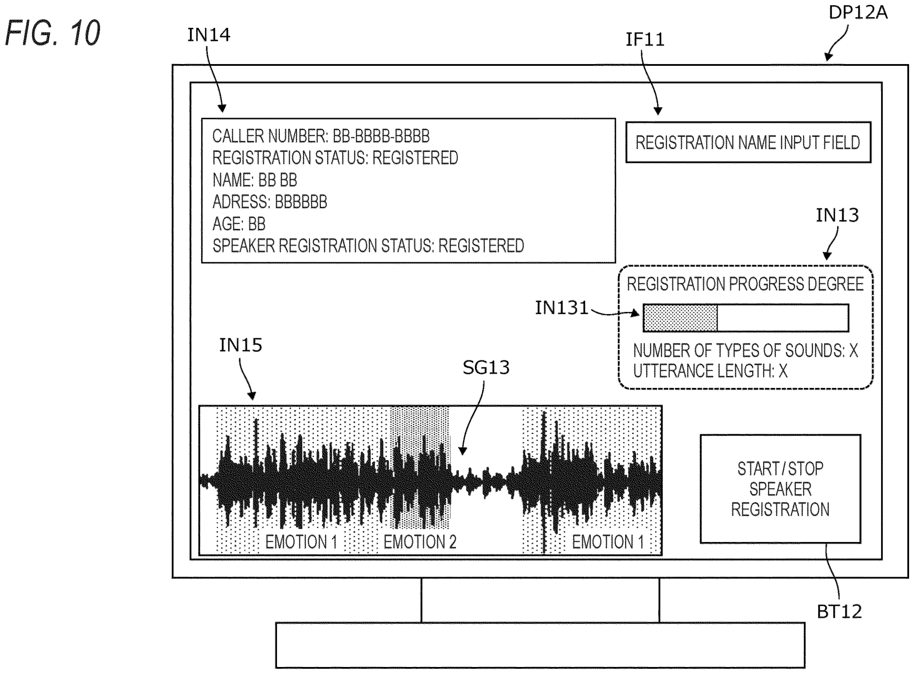

Specifically, in a case where it is determined in the process of step St12 that the telephone number of the user-side communication terminal UP1 is already registered in the registered speaker database DB (that is, there is registration in the registered speaker database DB), the processor 210 generates the progress notification screen DP12A (see Fig. 10) including information (for example, a name, an address, and an age of the user US) related to the user US associated with the telephone number, and outputs the progress notification screen DP12A to the information display unit DP (St12). On the other hand, in a case where it is determined in the process of step St12 that the telephone number of the user-side communication terminal UP1 has not been registered in the registered speaker database DB (that is, there is no registration in the registered speaker database DB), the processor 210 generates the progress notification screen DP11 (see Fig. 9) for notifying that the telephone number has not been registered, and outputs the progress notification screen DP11 to the information display unit DP (St12).

The processor 210 determines whether an operation of requesting to start registration of the utterance voice signal of the user US by the operator OP (that is, registration start operation) is received (St13).

In a case where it is determined in the process of Step St13 that the operation of requesting to start the registration of the utterance voice signal of the user US by the operator OP (that is, the registration start operation) is received (YES in St13), the processor 210 starts the registration of the utterance voice signal of the user US in the registered speaker database DB (St14).

On the other hand, in a case where it is determined in the process of step St13 that the operation of requesting to start the registration of the utterance voice signal of the user US by the operator OP (that is, the registration start operation) is not received (NO in St13), the processor 210 returns to the process of step St13 again, and determines whether the operation of requesting to start the registration of the utterance voice signal of the user US by the operator OP (that is, the registration start operation) is received. In a case where the processor 210 acquires, from the operator-side communication terminal OP1, a control command indicating that the communication between the user-side communication terminal UP1 and the operator-side communication terminal OP1 has ended, the processor 210 ends the operation procedure illustrated in Fig. 7.

The utterance section detection unit 21A in the processor 210 detects an utterance section during which the user US is uttering based on the voice signal of the user US transmitted from the operator-side communication terminal OP1 (St15).

The processor 210 executes voice recognition on the number of characters included in an utterance voice signal corresponding to the utterance section. The utterance section detection unit 21A calculates an utterance rate of the utterance voice signal based on the number of characters and a signal length (an utterance voice length, the number of seconds of utterance, and the like) of the utterance voice signal obtained by the voice recognition. The processor 210 executes utterance rate conversion processing on the utterance voice signal, and converts the utterance rate of the utterance voice signal into a predetermined utterance rate (St16). The process of step St16 is not essential and may be omitted.

The processor 210 records information on the detected utterance section (for example, a start time and an end time of the utterance section, the number of characters, the signal length (the utterance voice length, the number of seconds of utterance, and the like), the utterance rate before utterance rate conversion or after utterance rate conversion, and the like) in the memory 22 (St17).

The processor 210 analyzes and identifies emotion of the user US included in the utterance voice signal (St18). The processor 210 connects the identified utterance voice signals for each type of emotion (St19).

The processor 210 determines (calculates) a current progress degree of the registration processing of the utterance voice signal with respect to a registration target data amount registered in the registered speaker database DB (St20).

The processor 210 generates registration progress degree information IN13 indicating the current progress degree of the registration processing of the utterance voice signal. The processor 210 generates the progress notification screens DP11 and DP12A (see Figs. 9 and 10) including the registration progress degree information IN13, outputs the progress notification screens DP11 and DP12A to the information display unit DP for display, and notifies the operator OP of a determination result of the progress degree in real time (St21).

The processor 210 determines whether the current progress degree is equal to or greater than a threshold value (St22).

In a case where it is determined in the process of step St22 that the current progress degree is equal to or greater than the threshold value (YES in St22), the processor 210 determines whether the terminal is the user-side communication terminal UP1 of which the telephone number is already registered in the registered speaker database DB (St23).

On the other hand, in a case where it is determined in the process of step St22 that the current progress degree is not equal to or greater than the threshold value (NO in St22), the processor 210 determines whether a control command of requesting to continue the registration processing is received (St24).

In a case where the processor 210 determines in the process of step St24 that the control command of requesting to continue the registration processing is received on the basis of a control command based on an operation of the operator OP transmitted from the operator-side communication terminal OP1 (YES in St24), the process proceeds to the process of step St15.

On the other hand, in a case where the processor 210 determines in the process of step St24 that the control command of requesting to continue the registration processing is not received (that is, a control command of requesting to stop or end the registration processing is received) on the basis of the control command based on the operation of the operator OP transmitted from the operator-side communication terminal OP1 (NO in St24), the process proceeds to the process of step St30, and the processor 210 stops the registration processing of the acquired utterance voice signal in the registered speaker database DB (that is, the registration fails) (St30).

In a case where it is determined in the process of step St23 by the progress degree determination unit 21G that the terminal is the user-side communication terminal UP1 of which the telephone number is already registered in the registered speaker database DB (YES in St23), the processor 210 calculates similarity between the utterance voice signal registered in the registered speaker database DB and associated with the verified telephone number and the utterance voice signal acquired through the communication (St25). Here, the processor 210 calculates similarity between the utterance voice signal connected to each type of emotion by the emotion identification unit 21E and the utterance voice signal registered in the registered speaker database DB and including emotion similar to or identical to the emotion included in the utterance voice signal.

On the other hand, in a case where it is determined in the process of step St23 by the progress degree determination unit 21G that the terminal is not the user-side communication terminal UP1 of which the telephone number is already registered in the registered speaker database DB (NO in St23), the processor 210 registers (stores) the utterance voice signal connected to each type of emotion and the acquired telephone number of the user-side communication terminal UP1 in an associated manner in each emotion database of the registered speaker database DB (St26), and completes the registration processing of the utterance voice signal (St27).

The processor 210 determines whether the calculated similarity is equal to or greater than a threshold value (St28).

In a case where it is determined in the process of step St28 that the calculated similarity is equal to or greater than the threshold value (YES in St28), the processor 210 determines whether to update (overwrite) the utterance voice signal associated with the telephone number of the user-side communication terminal UP1 currently registered (stored) in the registered speaker database DB to a newly acquired utterance voice signal by receiving an operation of the operator OP (St29).

On the other hand, in a case where it is determined in the process of step St28 that the calculated similarity is not equal to or greater than the threshold value (NO in St28), the processor 210 determines that the utterance voice signal registered in the registered speaker database DB and the acquired utterance voice signal are voices of different users, and stops the registration processing of the acquired utterance voice signal in the registered speaker database DB (that is, the registration fails) (St30).

After the process of step St27 or step St30, the processor 210 generates a registration result screen (not illustrated) including a result of the registration processing of the utterance voice signal in the registered speaker database DB, and outputs the registration result screen to the information display unit DP for display (St31).

As described above, the authentication analysis device P1 according to Embodiment 1 can classify the utterance voice signals of the user US for each type of emotion and register (store) the utterance voice signals in the registered speaker database DB. Accordingly, in the authentication analysis device P1, even in a case where a variation is generated in the personality of the speaker included in the utterance voice signal due to the emotion of the user US during a communication, the user authentication accuracy can be further improved by using an utterance voice signal identified to be similar to or identical to the emotion included in the acquired utterance voice signal in the user authentication processing using the registered utterance voice signal.

Next, a progress notification screen of registration processing of an utterance voice signal acquired from a user-side communication terminal UP1 (that is, a user US) not registered in the registered speaker database DB will be described with reference to Fig. 9. Fig. 9 is a diagram illustrating an example of the progress notification screen DP11 of a new user. The progress notification screen DP11 illustrated in Fig. 9 is an example, and is not limited thereto as a matter of course.

The progress notification screen DP11 is a screen for notifying the operator OP of a progress state of the registration processing of the utterance voice signal of the user-side communication terminal UP1 (that is, the user US) which is not registered, and is generated by the processor 210 and displayed by the information display unit DP. The progress notification screen DP11 includes a user information field IN11, a registration name input field IF11, a voice signal graph IN12, the registration progress degree information IN13, and a speaker registration button BT11.

The user information field IN11 includes information related to the user US registered (stored) in association with the telephone number, the IP address, and the like of the user-side communication terminal UP1. The user information field IN11 illustrated in Fig. 9 is generated to include, for example, information including a caller number "AA-AAAA-AAAA" such as the telephone number and the IP address of the user-side communication terminal UP1, registration status information "unregistered (new)" indicating whether the telephone number of the user-side communication terminal UP1 is already registered, a name of the user US "none", an address of the user US "none", an age of the user US "none", and speaker registration status information "none".

The registration name input field IF11 is an input field capable of receiving an operator operation for a user name registered in the registered speaker database DB. The registration name input field IF11 may allow input of information related to the user US included in the user information field IN11.

The voice signal graph IN12 displays an emotion identification result of the user US included in an utterance voice signal SG12 in a superimposed manner on the utterance voice signal SG12 of the detected utterance section.

The registration progress degree information IN13 includes a current progress degree IN131 of the registration processing of the utterance voice signal with respect to the registration target data amount registered in the registered speaker database DB, and each of the number of sound types "X" and an utterance length (a signal length) "X" included in the utterance voice signal.

The speaker registration button BT11 receives a start operation or a stop operation of the registration processing of the utterance voice signal in the registered speaker database DB by the operator OP. In a case where the speaker registration button BT11 receives the start operation of the registration processing of the utterance voice signal in the registered speaker database DB by an operation of the operator OP, the speaker registration button BT11 executes the registration processing of the utterance voice signal acquired from the user-side communication terminal UP1 (that is, the user US) not registered in the registered speaker database DB. In addition, in a case where the speaker registration button BT11 receives the stop operation of the registration processing of the utterance voice signal in the registered speaker database DB by an operation of the operator OP, the speaker registration button BT11 stops the registration processing of the utterance voice signal acquired from the user-side communication terminal UP1 not registered in the registered speaker database DB.

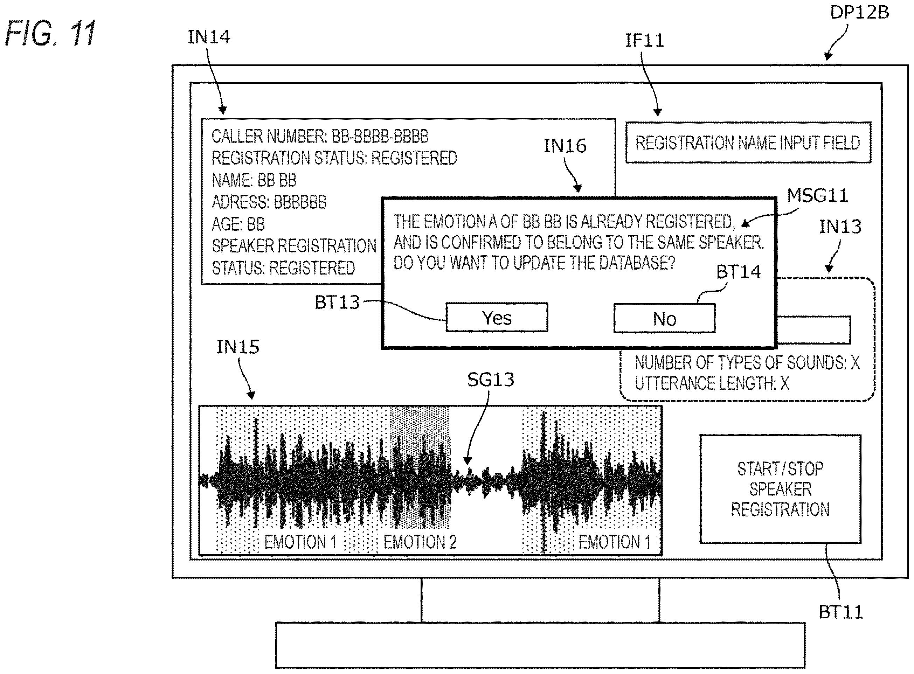

Next, a progress notification screen of registration processing of an utterance voice signal of the user-side communication terminal UP1 (that is, the user US) already registered in the registered speaker database DB will be described with reference to Figs. 10 and 11. Fig. 10 is a diagram illustrating an example of the progress notification screen DP12A of an already registered user. Fig. 11 is a diagram illustrating an example of the progress notification screen DP12B of the already registered user. Each of the progress notification screen DP12A illustrated in Fig. 10 and the progress notification screen DP12B illustrated in Fig. 11 is an example, and is not limited thereto as a matter of course.

The progress notification screen DP12A is a screen for notifying the operator OP of a progress state of the registration processing of the utterance voice signal acquired from the user-side communication terminal UP1 (that is, the user US) already registered in the registered speaker database DB, and is generated by the processor 210 and displayed by the information display unit DP. The progress notification screen DP12A includes a user information field IN14, the registration name input field IF11, a voice signal graph IN15, the registration progress degree information IN13, and a speaker registration button BT12.

The user information field IN14 includes information related to the user US registered (stored) in association with the telephone number, the IP address, and the like of the user-side communication terminal UP1. The user information field IN14 illustrated in Fig. 10 is generated to include, for example, information including a caller number "BB-BBBB-BBBB" such as the telephone number and the IP address of the user-side communication terminal UP1, registration status information "registered" indicating whether the telephone number of the user-side communication terminal UP1 is already registered, a name "BB BB" of the user US , an address "BBBBBB" of the user US , an age "BB" of the user US, and speaker registration status information "registered".

The voice signal graph IN15 displays an emotion identification result of the user US included in an utterance voice signal SG13 in a superimposed manner on the utterance voice signal SG13 of the detected utterance section.

The speaker registration button BT12 receives a start operation or a stop operation of the registration processing of the utterance voice signal in the registered speaker database DB by the operator OP. In a case where the speaker registration button BT12 receives the start operation of the registration processing of the utterance voice signal in the registered speaker database DB by an operation of the operator OP, the speaker registration button BT12 updates (overwrites) an utterance voice signal currently registered in the registered speaker database DB to the acquired utterance voice signal. In addition, in a case where the speaker registration button BT12 receives the stop operation of the registration processing of the utterance voice signal in the registered speaker database DB by an operation of the operator OP, the speaker registration button BT12 stops the registration processing of the utterance voice signal in the registered speaker database DB.

The progress notification screen DP12B is a screen that is generated by the processor 210 and displayed by the information display unit DP in a case where it is determined that the utterance voice signal acquired by the progress degree determination unit 21G reaches a registration target amount (the progress degree is equal to or greater than the threshold value). The progress notification screen DP12B is generated to include new update notification information IN16 in addition to various kinds of information included in the progress notification screen DP12A.

Here, the update notification information IN16 may be generated in the case where it is determined that the utterance voice signal acquired by the progress degree determination unit 21G reaches the registration target amount (the progress degree is equal to or greater than the threshold value), or may be generated in a case where the speaker registration button BT11 receives the start operation of the registration processing of the utterance voice signal in the registered speaker database DB by an operation of the operator OP.

The update notification information IN16 includes a message MSG11 that "The emotion 1 of Mr./Ms. BB BB is already registered, and is confirmed to belong to the same speaker. Do you want to update the database?", an update button BT13, and a registration stop button BT14.

In a case where the update button BT13 is pressed (selected) by an operation of the operator OP, the processor 210 updates the utterance voice signal already registered in the registered speaker database DB to the acquired utterance voice signal.

As described above, the authentication analysis device P1 according to Embodiment 1 includes the communication unit 20 (example of acquisition unit) that acquires the voice signal of the utterance voice of the speaker (that is, the user), the emotion identification unit 21E that identifies at least one type of emotion of the speaker included in the voice signal, and the database registration unit 21F (an example of the registration unit) that registers the voice signal (that is, the utterance voice signal) for each type of emotion in the registered speaker database DB (an example of the database) based on the identification result by the emotion identification unit 21E.

As a result, the authentication analysis device P1 according to Embodiment 1 can classify utterance voice signals of the user US for each type of emotion and register (store) the utterance voice signals in the registered speaker database DB. Accordingly, in the authentication analysis device P1, even in a case where a variation is generated in the personality of the speaker included in the utterance voice signal due to the emotion of the user US during a communication, a decrease in user authentication accuracy can be more effectively prevented by using an utterance voice signal identified to be similar to or identical to the emotion included in the acquired utterance voice signal in the user authentication processing using the registered utterance voice signal.

As described above, the registered speaker database DB in the authentication analysis device P1 according to Embodiment 1 includes a plurality of emotion databases (for example, the first emotion database DB1, the second emotion database DB2, ..., and the Nth emotion database DBN illustrated in Fig. 2) corresponding to respective types of emotion. The database registration unit 21F registers a voice signal for each type of emotion in an emotion database corresponding to the emotion. Accordingly, since the authentication analysis device P1 according to Embodiment 1 can manage the voice signal for each type of emotion, the utterance voice signal already registered in the user authentication processing can be used by referring to an emotion database corresponding to emotion of the user US during a communication. Accordingly, the authentication analysis device P1 can improve the user authentication accuracy.

As described above, the communication unit 20 in the authentication analysis device P1 according to Embodiment 1 acquires an utterance voice and speaker information capable of identifying a speaker of the utterance voice. The database registration unit 21F registers the voice signal for each type of emotion and the speaker information in an associated manner in the emotion database corresponding to the emotion. Accordingly, even in a case where utterance voice signals of respective types of emotion are registered in each emotion database, the authentication analysis device P1 according to Embodiment 1 can manage utterance voice signals of the same speaker.

As described above, the database registration unit 21F in the authentication analysis device P1 according to Embodiment 1 updates, in a case where it is determined that there is speaker information identical to the acquired speaker information among the speaker information registered in the emotion database, the voice signal of the identical speaker information already registered in the emotion database to the voice signal identified for each type of emotion. Accordingly, the authentication analysis device P1 according to Embodiment 1 overwrites (updates) the utterance voice signal registered (stored) in each emotion database to a newly acquired utterance voice signal, thereby more efficiently preventing occurrence of an available capacity shortage in the registered speaker database DB.

As described above, the authentication analysis device P1 according to Embodiment 1 further includes the similarity calculation unit 21D that calculates, in a case where it is determined that there is speaker information identical to the acquired speaker information among the speaker information registered in the emotion database by the database registration unit 21F, the similarity between the voice signal of the identical speaker information and the acquired voice signal. In a case where it is determined that the determined similarity is equal to or greater than the threshold value, the database registration unit 21F updates the voice signal already registered in the emotion database to the identified voice signal. Accordingly, the authentication analysis device P1 according to Embodiment 1 can overwrite (update) the utterance voice signal with which the speaker information determined to be the same speaker is associated and which is registered (stored) in each emotion database to the newly acquired utterance voice signal based on the similarity.

As described above, in a case where it is determined that the calculated similarity is not equal to or greater than the threshold value, the database registration unit 21F in the authentication analysis device P1 according to Embodiment 1 omits the update of the voice signal already registered in the emotion database. Accordingly, in a case where it is determined that the person is not the same person based on the similarity, the authentication analysis device P1 according to Embodiment 1 can omit overwriting (updating) the utterance voice signal registered (stored) in each emotion database.

As described above, the database registration unit 21F in the authentication analysis device P1 according to Embodiment 1 registers, in a case where it is determined that there is no speaker information identical to the acquired speaker information among the speaker information registered in the emotion database, the voice signal identified for each type of emotion in the corresponding emotion database. Accordingly, in a case where it is determined that the utterance voice signals of the same speaker are not registered based on the similarity, the authentication analysis device P1 according to Embodiment 1 can register (store) the acquired utterance voice signal for each type of emotion as a new utterance voice signal of the speaker in each emotion database.

As described above, the authentication analysis device P1 according to Embodiment 1 further includes the utterance section detection unit 21A (an example of a conversion unit) that converts the voice signal acquired by the communication unit 20 to have a predetermined utterance rate. The utterance section detection unit 21A identifies the emotion using the voice signal converted to have the predetermined utterance rate. Accordingly, the authentication analysis device P1 according to Embodiment 1 can improve the user authentication accuracy by converting the utterance rate into the predetermined utterance rate even in a case where a variation is generated in the utterance rate of the speaker.

As described above, in the authentication analysis device P1 according to Embodiment 1, the speaker information is the telephone number of the user-side communication terminal UP1 (an example of the voice collecting device) that collects the utterance voice. Accordingly, the authentication analysis device P1 according to Embodiment 1 can more effectively prevent spoofing by another speaker.

### (Background of Embodiment 2)

Patent Literature 1 discloses a communication device that stores, in a case where it is determined that a total acquisition time length of a telephone number in a telephone directory and at least one piece of voiceprint data corresponding to a telephone number identical to an acquired telephone number is longer than a time required for voiceprint verification, the acquired telephone number and the voiceprint data in an associated manner. However, even when the telephone number is the same, for example, an utterance may be made exchanging a speaker corresponding to the telephone number and voiceprint data of a person other than the speaker. In such a case, since the communication device stores voiceprint data of a plurality of different speakers in association with the acquired telephone numbers, there is a possibility that the accuracy of voiceprint verification may be reduced during voiceprint verification.

Therefore, in the following Embodiment 2, an example of an utterance voice registration device and an utterance voice registration method for detecting switching of a speaker during a communication and collecting utterance voices used for voice authentication will be described. In the following description, the same components as those in Embodiment 1 are denoted by the same reference numerals, and thus the description thereof will be omitted.

### (Embodiment 2)

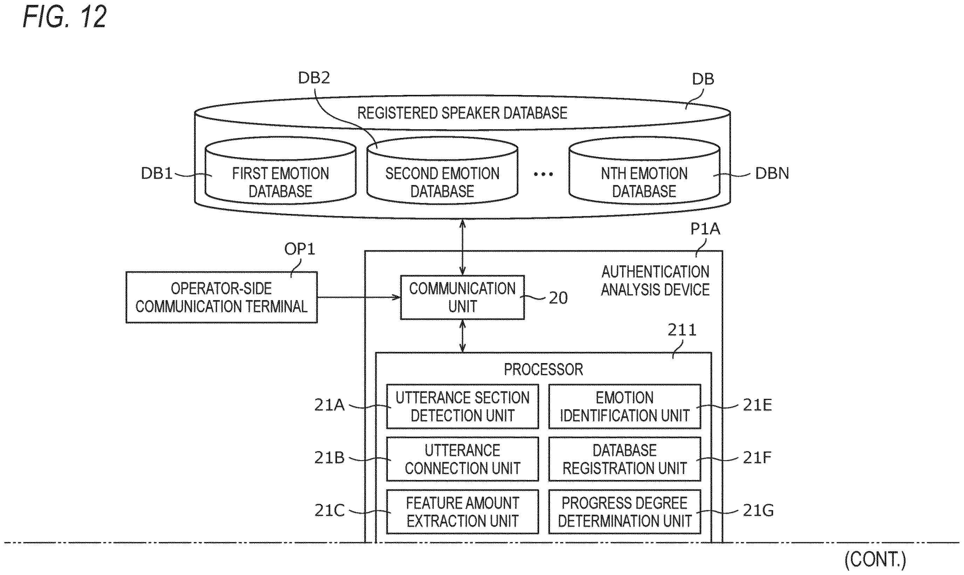

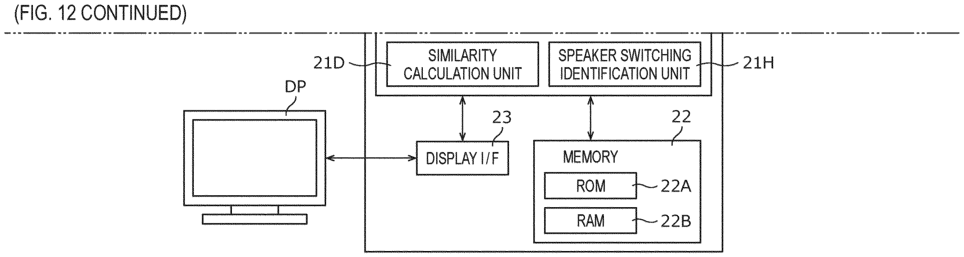

A block diagram illustrating an example of an internal configuration of an authentication analysis device P1A according to Embodiment 2 will be described with reference to Fig. 12. Fig. 12 is a block diagram illustrating the example of the internal configuration of the authentication analysis device P1A according to Embodiment 2.

The authentication analysis device P1A according to Embodiment 2 is an example of a computer, detects switching of a speaker during a communication, and extracts an utterance voice signal of the user US to be registered in the registered speaker database DB from utterance voice signals. The authentication analysis device P1A analyzes and identifies emotion included in the extracted utterance voice signal of the user US, and registers (stores) the utterance voice signal for each identified type of emotion in a corresponding emotion database.

A processor 211 of the authentication analysis device P1A according to Embodiment 2 implements functions of the utterance section detection unit 21A, the utterance connection unit 21B, the feature amount extraction unit 21C, the similarity calculation unit 21D, the emotion identification unit 21E, the database registration unit 21F, the progress degree determination unit 21G, and a speaker switching identification unit 21H.

The speaker switching identification unit 21H generates a most recent connection signal connecting each of a plurality of most recently detected utterance voice signals among utterance voice signals transmitted from the operator-side communication terminal OP1 and detected by the utterance section detection unit 21A. The speaker switching identification unit 21H determines similarity between the generated most recent connection signal and the utterance voice signal of the user US registered in the registered speaker database DB. The speaker switching identification unit 21H repeatedly executes generation processing of the most recent connection signal and determination processing of the similarity, and determines switching of the speaker based on the determined similarity or a change in the similarity.

The speaker switching identification unit 21H extracts the utterance voice signal of the user US which is an utterance voice signal to be registered in the registered speaker database DB based on a timing at which the switching of the speaker is determined, generates a long-time connection signal connecting each of all extracted utterance voice signals, and outputs the long-time connection signal to the database registration unit 21F.

The database registration unit 21F registers (stores) the utterance voice signal in each emotion database of the registered speaker database DB based on the long-time connection signal output from the speaker switching identification unit 21H and an emotion identification result of the utterance voice signal corresponding to each utterance section output from the emotion identification unit 21E.

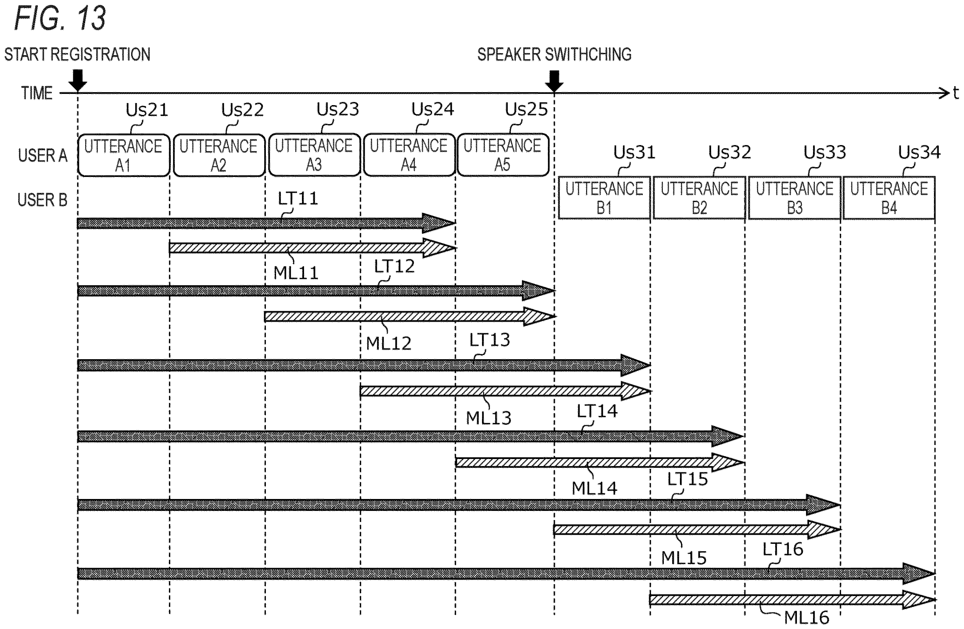

Next, speaker switching identification processing executed by the speaker switching identification unit 21H will be described with reference to Fig. 13. Fig. 13 is a diagram illustrating an example of the speaker switching identification processing. The speaker switching identification processing described with reference to Fig. 13 is an example and is not limited thereto. For example, the number of utterance voice signals included in the most recent connection signal is not limited to three. In the description of Fig. 13, an owner of the user-side communication terminal UP1 is a user A.

In the example illustrated in Fig. 13, the user A who is the owner of the user-side communication terminal UP1 passes the user-side communication terminal UP1 to a user B during a communication with the operator OP. Accordingly, the voice signal transmitted from the operator-side communication terminal OP1 is switched from an utterance voice of the user A to an utterance voice of the user B.

Each of utterance voice signals Us21, Us22, Us23, Us24, and Us25 is an utterance voice signal of the user A. Each of an "utterance A1" to an "utterance A5" respectively corresponding to each of the utterance voice signals Us21 to Us25 indicates the utterance voice signal of each utterance section detected by the utterance section detection unit 21A.

Each of utterance voice signals Us31, Us32, Us33, and Us34 is an utterance voice signal of the user B. Each of an "utterance B1" to an "utterance B4" respectively corresponding to each of the utterance voice signals Us31 to Us34 indicates the utterance voice signal detected by the utterance section detection unit 21A.

The utterance section detection unit 21A in the authentication analysis device P1 detects the utterance sections "utterance A1" to "utterance A5" of the user A and the utterance sections "utterance B1" to "utterance B4" of the user B, respectively, based on the voice signal transmitted from the operator-side communication terminal OP1.

The processor 211 starts registration of the utterance voice signal of the user A in the registered speaker database DB at a timing when it is determined that an operation of requesting a start of the registration of the utterance voice signal of the user A (that is, registration start operation) by the operator OP is received.

The processor 211 verifies the telephone number of the user-side communication terminal UP1 transmitted from the operator-side communication terminal OP1 with each of the telephone numbers of the plurality of user-side communication terminals registered in the registered speaker database DB, and specifies the user A who is the owner of the user-side communication terminal UP1.

The speaker switching identification unit 21H determines similarity between a most recent connection signal ML11 connecting each of the three utterance sections "utterance A2" to "utterance A4" detected most recently by the utterance section detection unit 21A and the utterance voice signal of the user A registered in the registered speaker database DB. In this case, since the most recent connection signal ML11 is entirely composed of the utterance voice of the user A and has similarity equal to or greater than a predetermined threshold value, the speaker switching identification unit 21H determines that the similarity of the most recent connection signal ML11 is "high". The speaker switching identification unit 21H records the most recent connection signal ML11 used for the determination of the similarity for the first time and the similarity determined for the first time in an associated manner in the memory 22.

The speaker switching identification unit 21H determines similarity between a most recent connection signal ML12 connecting each of the three utterance sections "utterance A3" to "utterance A5" detected most recently by the utterance section detection unit 21A and the utterance voice signal of the user A registered in the registered speaker database DB. In this case, since the most recent connection signal ML12 is entirely composed of the utterance voice of the user A and has similarity equal to or greater than the predetermined threshold value, the speaker switching identification unit 21H determines that the similarity of the most recent connection signal ML12 is "high". The speaker switching identification unit 21H records the most recent connection signal ML12 used for the determination of the similarity for the second time and the similarity determined for the second time in an associated manner in the memory 22.

The speaker switching identification unit 21H determines whether the speaker of the user-side communication terminal UP1 is switched based on a change between the similarity determined by the similarity determination processing of the first time and the similarity determined by the similarity determination processing of the second time. Since the similarity of the most recent connection signal ML11 is "high" and the similarity of the most recent connection signal ML12 is also "high", the speaker switching identification unit 21H illustrated in Fig. 13 determines that a speaker of the most recent connection signal ML11 and a speaker of the most recent connection signal ML12 are not switched.

The speaker switching identification unit 21H determines similarity between a most recent connection signal ML13 connecting each of the three utterance sections "utterance A4" to "utterance B 1" detected most recently by the utterance section detection unit 21A and the utterance voice signal of the user A registered in the registered speaker database DB. In this case, since the most recent connection signal ML13 is composed of the utterance voices of the user A and the user B and has similarity less than the predetermined threshold value, the speaker switching identification unit 21H determines that the similarity of the most recent connection signal ML13 is "low". The speaker switching identification unit 21H records the most recent connection signal ML13 used for the determination of the similarity for the third time and the similarity determined for the third time in an associated manner in the memory 22.

The speaker switching identification unit 21H determines whether the speaker of the user-side communication terminal UP1 is switched based on a change between the similarity determined by the similarity determination processing of the second time and the similarity determined by the similarity determination processing of the third time. Since the similarity of the most recent connection signal ML12 is "high" and similarity of the most recent connection signal ML13 is "low", the speaker switching identification unit 21H illustrated in Fig. 13 determines that the speaker of the most recent connection signal ML12 and a speaker of the most recent connection signal ML13 are switched.

The speaker switching identification unit 21H determines similarity between a most recent connection signal ML14 connecting each of the three utterance sections "utterance A5" to "utterance B2" detected most recently by the utterance section detection unit 21A and the utterance voice signal of the user A registered in the registered speaker database DB. In this case, since the most recent connection signal ML14 is composed of the utterance voices of the user A and the user B and has similarity less than the predetermined threshold value, the speaker switching identification unit 21H determines that similarity of the most recent connection signal ML14 is "low". The speaker switching identification unit 21H records the most recent connection signal ML14 used for the determination of the similarity for the fourth time and the similarity determined for the fourth time in an associated manner in the memory 22.

The speaker switching identification unit 21H determines whether the speaker of the user-side communication terminal UP1 is switched based on a change between the similarity determined by the similarity determination processing of the third time and the similarity determined by the similarity determination processing of the fourth time. Since the similarity of the most recent connection signal ML13 is "low" and the similarity of the most recent connection signal ML14 is also "low", the speaker switching identification unit 21H illustrated in Fig. 13 determines that the speaker of the most recent connection signal ML13 and a speaker of the most recent connection signal ML14 are not switched.

The speaker switching identification unit 21H determines similarity between a most recent connection signal ML15 connecting each of the three utterance sections "utterance B 1" to "utterance B3" detected most recently by the utterance section detection unit 21A and the utterance voice signal of the user A registered in the registered speaker database DB. In this case, since the most recent connection signal ML15 is entirely composed of the utterance voice of the user B and has similarity less than the predetermined threshold value, the speaker switching identification unit 21H determines that the similarity of the most recent connection signal ML15 is "low". The speaker switching identification unit 21H records the most recent connection signal ML15 used for the determination of the similarity for the fifth time and the similarity determined for the fifth time in an associated manner in the memory 22.

The speaker switching identification unit 21H determines whether the speaker of the user-side communication terminal UP1 is switched based on a change between the similarity determined by the similarity determination processing of the fourth time and the similarity determined by the similarity determination processing of the fifth time. Since the similarity of the most recent connection signal ML14 is "low" and the similarity of the most recent connection signal ML15 is "low", the speaker switching identification unit 21H illustrated in Fig. 13 determines that the speaker of the most recent connection signal ML14 and a speaker of the most recent connection signal ML15 are not switched.

The speaker switching identification unit 21H determines similarity between a most recent connection signal ML16 connecting each of the three utterance sections "utterance B2" to "utterance B4" detected most recently by the utterance section detection unit 21A and the utterance voice signal of the user A registered in the registered speaker database DB. In this case, since the most recent connection signal ML16 is entirely composed of the utterance voice of the user B and has similarity less than the predetermined threshold value, the speaker switching identification unit 21H determines that the similarity of the most recent connection signal ML16 is "low". The speaker switching identification unit 21H records the most recent connection signal ML16 used for the determination of the similarity for the sixth time and the similarity determined for the sixth time in an associated manner in the memory 22.

The speaker switching identification unit 21H determines whether the speaker of the user-side communication terminal UP1 is switched based on a change between the similarity determined by the similarity determination processing of the fifth time and the similarity determined by the similarity determination processing of the sixth time. Since the similarity of the most recent connection signal ML15 is "low" and the similarity of the most recent connection signal ML16 is also "low", the speaker switching identification unit 21H illustrated in Fig. 13 determines that the speaker of the most recent connection signal ML15 and a speaker of the most recent connection signal ML16 are not switched.

The speaker switching identification unit 21H generates a long-time connection signal LT12 connecting each of the utterance voice signals Us21 to Us25 up to the most recent connection signal ML12 determined to be the user A based on the determined similarity, and outputs the long-time connection signal LT12 to the database registration unit 21F.

The database registration unit 21F registers (stores) the long-time connection signal LT12 output from the speaker switching identification unit 21H and the telephone number of the user-side communication terminal UP1 in an associated manner in each emotion database of the registered speaker database DB based on an emotion identification result for each utterance voice signal output from the emotion identification unit 21E.

The speaker switching identification unit 21H according to Embodiment 2 may generate each of the long-time connection signals LT11, LT12, LT13, LT14, LT15, and LT16 connecting all the utterance voice signals from the utterance section when the similarity determination processing is started to the most recent utterance section used for the similarity determination processing every time the similarity determination processing is executed.

In a case where it is determined that the similarity is equal to or greater than the predetermined value and the speaker is not switched, the speaker switching identification unit 21H may generate a long-time connection signal connecting all the utterance voice signals up to the utterance section and output the long-time connection signal to the database registration unit 21F.

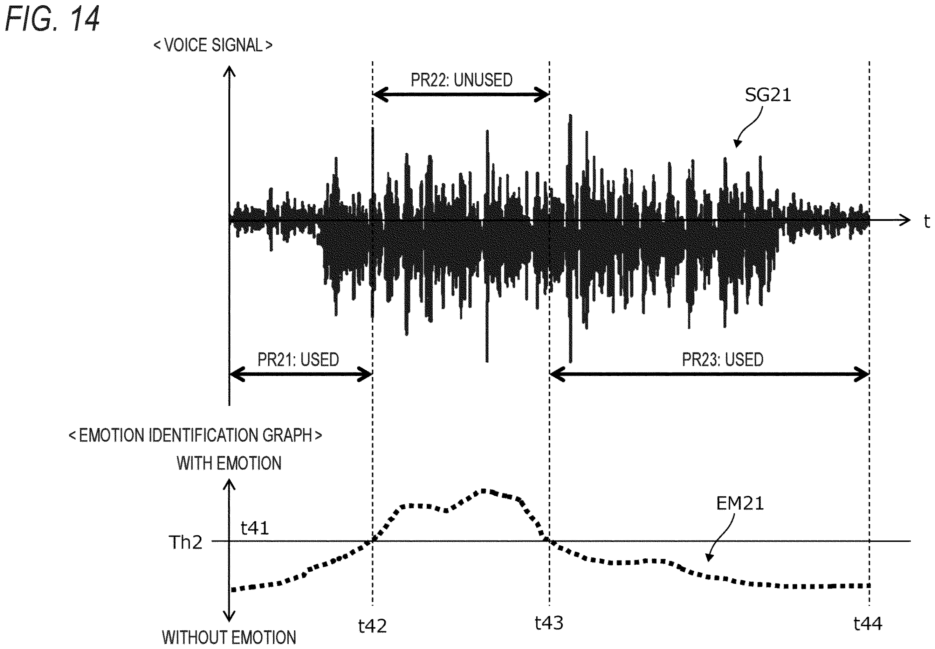

Next, emotion identification processing according to Embodiment 2 will be described with reference to Fig. 14. Fig. 14 is a diagram illustrating an example of the emotion identification processing according to Embodiment 2. A method for the emotion identification processing described with reference to Fig. 14 may be executed in the same manner also in the emotion identification unit 21E according to Embodiment 1.

The emotion identification processing described with reference to Fig. 14 is described as an example of identifying an utterance voice signal including a type of emotion (that is, not normal) and an utterance voice signal not including a type of emotion (that is, normal), but is not limited thereto. For example, the emotion identification unit 21E may identify an utterance voice signal including a predetermined type of emotion (for example, anger) and an utterance voice signal not including the predetermined type of emotion, or may identify an utterance voice signal including two or more predetermined types of emotion (for example, anger and excited) and an utterance voice signal not including the two or more predetermined types of emotion. In addition, the emotion identification unit 21E may identify the emotion corresponding to each emotion database by further executing emotion identification processing on the utterance voice signal not including the two or more predetermined types of emotion.

The emotion identification unit 21E identifies emotion of the user US based on an acquired utterance voice signal SG21, and extracts a time zone PR22 of an utterance voice signal including the emotion and each of time zones PR21 and PR23 of an utterance voice signal not including the emotion.

In the example illustrated in Fig. 14, the emotion identification unit 21E analyzes the emotion of the user US included in the utterance voice signal SG21, determines that an utterance voice signal which is equal to or greater than a threshold value Th2 includes the emotion, and determines that an utterance voice signal which is less than the threshold value Th1 does not include the emotion. The emotion identification unit 21E identifies the utterance voice signal in the time zone PR21 from a time t41 to a time t42 and the utterance voice signal in the time zone PR23 from a time t43 to a time t44 as "not including emotion", and identifies the utterance voice signal in the time zone PR22 from the time t42 to the time t43 as "including emotion", respectively. The emotion identification unit 21E combines the utterance voice signal in the time zone PR21 and the utterance voice signal in the time zone PR23, and outputs the combined signals to the database registration unit 21F.

The database registration unit 21F registers (stores) the utterance voice signal output from the emotion identification unit 21E and the telephone number of the user-side communication terminal UP1 in an associated manner in the registered speaker database DB.

Accordingly, the authentication analysis device P1 according to Embodiment 2 can extract only an utterance voice signal (the utterance voice signal not including the emotion in Fig. 14) more suitable for the user authentication processing based on the emotion included in the utterance voice signal of the user US and register (store) the utterance voice signal in the registered speaker database DB. Accordingly, in the authentication analysis device P1, even in a case where a variation is generated in the personality of the speaker included in the utterance voice signal due to the emotion of the user US during a communication, a decrease in the user authentication accuracy can be more effectively prevented by using the utterance voice signal not including the emotion in the user authentication processing using the registered utterance voice signal.

Accordingly, the authentication analysis device P1 overwrites (updates) the utterance voice signal registered (stored) in the registered speaker database DB to a newly acquired utterance voice signal, thereby improving the user authentication accuracy through user authentication processing using an utterance voice signal that includes the latest personality, and more efficiently preventing occurrence of an available capacity shortage in the registered speaker database DB.

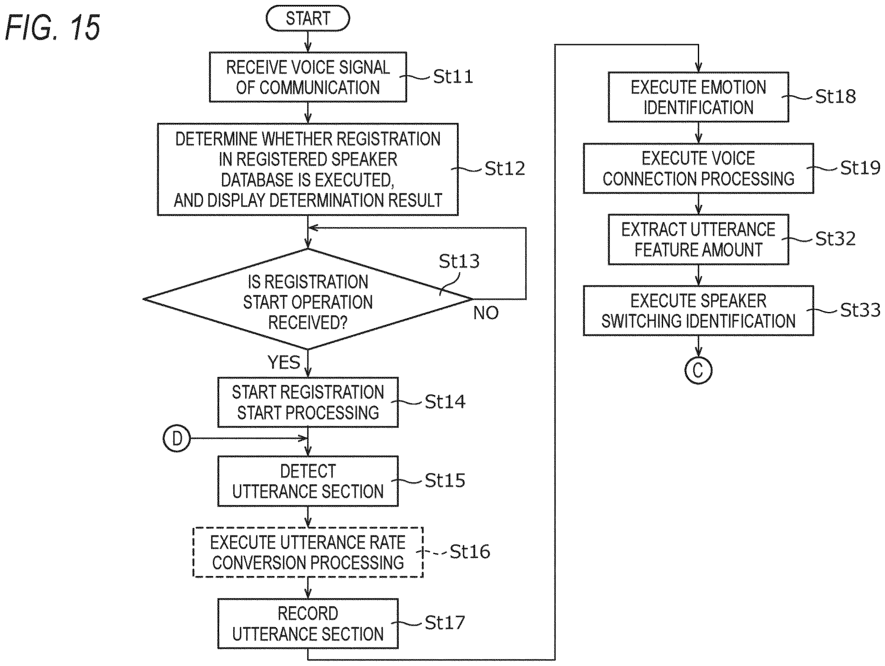

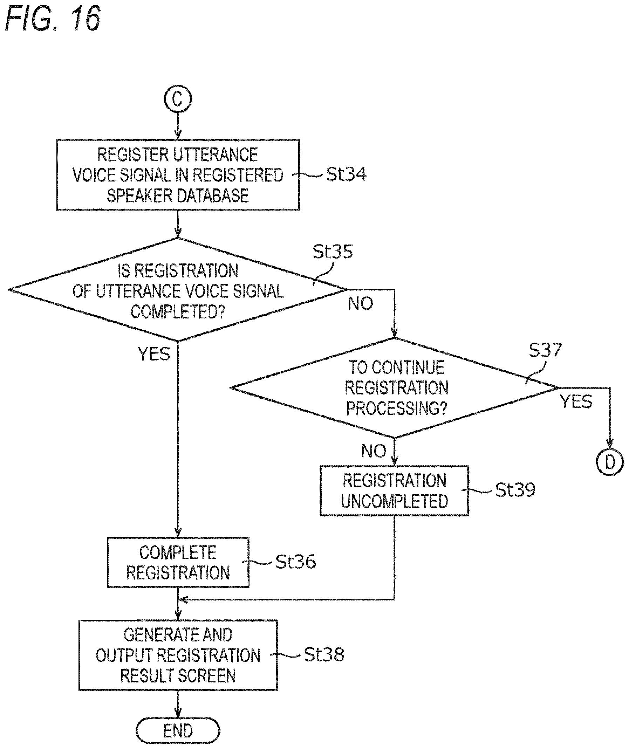

Next, an operation procedure of the authentication analysis device P1A according to Embodiment 2 will be described with reference to Figs. 15 and 16. Fig. 15 is a flowchart illustrating an example of voice registration processing according to Embodiment 2. Fig. 16 is a flowchart illustrating an example of the voice registration processing according to Embodiment 2. In the descriptions of Figs. 15 and 16, the description of the same processing as the operation procedure of the authentication analysis device P1 according to Embodiment 1 illustrated in Figs. 7 and 8 will be omitted.

The processor 211 of the authentication analysis device P1A extracts an utterance feature amount included in the utterance voice signal of each utterance section (St32).

The processor 211 generates a most recent connection signal by connecting respective utterance voice signals of utterance sections of several times detected most recently by the utterance section detection unit 21A. The processor 211 verifies the telephone number of the user-side communication terminal UP1 with each of the telephone numbers of the plurality of user-side communication terminals registered in the registered speaker database DB. The processor 211 determines similarity between the generated most recent connection signal and, as a result of the verification, an utterance voice signal for each type of emotion associated with the telephone number identical to the telephone number of the user-side communication terminal UP1 in the registered speaker database DB. The processor 211 determines whether the speaker is switched (speaker switching identification) based on a change in the determined similarity (St33). Here, in a case where the determination processing of the similarity is executed for the first time, the processor 211 may omit the speaker switching identification processing.

The processor 211 registers (stores) the utterance voice signal having the similarity equal to or greater than the threshold value and the telephone number of the user-side communication terminal UP1 in an associated manner in each emotion database of the registered speaker database DB (St34). In a case where it is determined in the process of step St34 that the determined similarity is not equal to or greater than the threshold value, the processor 211 omits the registration (storage) processing of the utterance voice signal in each emotion database of the registered speaker database DB.

The processor 211 determines whether registration of an utterance voice signal of a registration target data amount in the registered speaker database DB is completed (St35).

In a case where it is determined in the process of step St35 that the registration of the utterance voice signal of the registration target data amount in the registered speaker database DB is completed (YES in St35), the processor 211 completes the registration processing of the utterance voice signal (St36).

In a case where it is determined in the process of step St35 that the registration of the utterance voice signal of the registration target data amount in the registered speaker database DB is not completed (NO in St35), the processor 211 determines whether a control command of requesting to continue the registration processing is received (St37).

In a case where the processor 211 determines in the process of step St37 that the control command of requesting to continue the registration processing is received on the basis of a control command based on an operation of the operator OP transmitted from the operator-side communication terminal OP1 (YES in St37), the process proceeds to the process of step St15.

On the other hand, in a case where the processor 211 determines in the process of step St37 that the control command of requesting to continue the registration processing is not received (that is, a control command of requesting to stop or end the registration processing is received) on the basis of a control command based on an operation of the operator OP transmitted from the operator-side communication terminal OP1 (NO in St37), the processor 211 stops the registration processing of the acquired utterance voice signal in the registered speaker database DB (that is, the registration fails) (St39).

After the process of step St36 or step St39, the processor 211 generates a registration result screen (not illustrated) including a result of the registration processing of the utterance voice signal in the registered speaker database DB, and outputs the registration result screen to the information display unit DP for display (St38).

As described above, the authentication analysis device P1 according to Embodiment 2 can register only the utterance voice signal more suitable for the user authentication processing in the registered speaker database DB based on whether there is the emotion included in the utterance voice signal of the user US. Accordingly, in the authentication analysis device P1, even in a case where a variation is generated in the personality of the speaker included in the utterance voice signal due to the emotion of the user US during a communication, the user authentication accuracy in the user authentication processing using the registered utterance voice signal can be further improved.

As described above, the authentication analysis device P1A according to Embodiment 2 includes the communication unit 20 (an example of the acquisition unit) that acquires the voice signal of the utterance voice of the speaker, the utterance section detection unit 21A (an example of a sensing unit) that detects a first utterance section of the speaker and a second utterance section different from the first utterance section based on the voice signal, the speaker switching identification unit 21H (an example of the detection unit) that compares a voice signal of the first utterance section with a voice signal of the second utterance section and detects switching from the speaker to another speaker different from the speaker (for example, switching from the user A to the user B illustrated in Fig. 13), and the database registration unit 21F (an example of the registration unit) that registers the voice signal of the speaker in the registered speaker database DB (an example of the database) based on the detection of the switching by the speaker switching identification unit 21H.

As a result, the authentication analysis device P1A according to Embodiment 2 can detect the switching of the speaker based on the utterance voice signal of each utterance section even in a case where voice signals of a plurality of different speakers are acquired in a communication using the same user-side communication terminal UP1. Accordingly, the authentication analysis device P1A can more effectively prevent erroneous registration such as registering and overwriting an utterance voice signal registered in the registered speaker database DB with an utterance voice signal of another speaker mixed therein.

As described above, the authentication analysis device P1A according to Embodiment 2 further includes the similarity calculation unit 21D that calculates similarity between two different voice signals. The communication unit 20 further acquires speaker information capable of identifying a speaker. The similarity calculation unit 21D acquires an utterance voice signal (an example of a registration voice signal) associated with speaker information identical to the acquired speaker information among respective pieces of speaker information of a plurality of speakers registered in the registered speaker database DB, and calculates first similarity between the registration voice signal and the first utterance section and second similarity between the registration voice signal and the second utterance section. The speaker switching identification unit 21H detects switching from a speaker to another speaker based on a change between the first similarity and the second similarity. Accordingly, the authentication analysis device P1A according to Embodiment 2 can identify the utterance voice signal of the speaker who is the owner of the user-side communication terminal UP1 and an utterance voice signal of another speaker based on the similarity to the utterance voice signal already registered in the registered speaker database DB. Accordingly, the authentication analysis device P1A can more effectively prevent erroneous registration such as registering and overwriting an utterance voice signal to be registered with an utterance voice signal of another speaker mixed therein.

As described above, in a case where it is determined that the similarity is not equal to or greater than the threshold value, the speaker switching identification unit 21H in the authentication analysis device P1A according to Embodiment 2 detects the switching from a speaker to another speaker. Accordingly, the authentication analysis device P1A according to Embodiment 2 can identify the utterance voice signal of the speaker who is the owner of the user-side communication terminal UP1 and an utterance voice signal of another speaker based on the similarity to the utterance voice signal already registered in the registered speaker database DB.

As described above, the authentication analysis device P1A according to Embodiment 2 further includes the emotion identification unit 21E that identifies at least one type of emotion included in a voice signal, and the utterance section detection unit 21A (an example of a deletion unit) that deletes an utterance section including emotion based on an identification result by the emotion identification unit. The utterance section detection unit 21A detects the first utterance section and the second utterance section of the speaker based on a voice signal from which the utterance section including the emotion is deleted. Accordingly, the authentication analysis device P1A according to Embodiment 2 can extract only the utterance voice signal (the utterance voice signal not including the emotion in Fig. 14) more suitable for the user authentication processing based on the emotion included in the utterance voice signal of the user US and register (store) the utterance voice signal in the registered speaker database DB.

As described above, the authentication analysis device P1A according to Embodiment 2 further includes the emotion identification unit 21E that identifies at least one type of emotion included in the voice signal, and the communication unit 20 (an example of an input unit) that receives an operation as to whether to delete the utterance section including the emotion based on the identification result by the emotion identification unit 21E. In a case where the communication unit 20 receives an operation of deleting the utterance section, the utterance section detection unit 21A deletes the utterance section including the emotion and detects the first utterance section and the second utterance section of the speaker based on the voice signal from which the utterance section including the emotion is deleted. Accordingly, the authentication analysis device P1A according to Embodiment 2 can select whether to register (store) the utterance voice signal including the emotion of the user US in the registered speaker database DB based on an operation of the operator OP.

As described above, the authentication analysis device P1A according to Embodiment 2 further includes the utterance section detection unit 21A (an example of the conversion unit) that converts the voice signal acquired by the communication unit 20 to have a predetermined utterance rate. The emotion identification unit 21E identifies emotion using the voice signal converted to have the predetermined utterance rate. Accordingly, the authentication analysis device P1A according to Embodiment 2 can improve the user authentication accuracy by converting the utterance rate into the predetermined utterance rate even in a case where a variation is generated in the utterance rate of the speaker.

As described above, in the authentication analysis device P1A according to Embodiment 2, each of the first utterance section and the second utterance section includes at least the same utterance section. Accordingly, the authentication analysis device P1A according to Embodiment 2 can detect a timing of the switching of the speaker with higher accuracy.

As described above, in the authentication analysis device P1A according to Embodiment 2, the speaker information is the telephone number of the user-side communication terminal UP1 (an example of the voice collecting device) that collects the utterance voice. Accordingly, the authentication analysis device P1A according to Embodiment 2 can more effectively prevent spoofing by another speaker.

### (Background of Embodiment 3)

Patent Literature 1 discloses a communication device that stores, in a case where it is determined that a total acquisition time length of a telephone number in a telephone directory and at least one piece of voiceprint data corresponding to a telephone number identical to an acquired telephone number is longer than a time required for voiceprint verification, the acquired telephone number and the voiceprint data in an associated manner. However, the above-described communication device collects an utterance voice (voiceprint data) based on an operation of a speaker himself or herself, and requests the speaker to select whether to register the voiceprint data in a case where it is determined that the total acquisition time length of the voiceprint data is longer than a time required for voiceprint verification at a timing when the collection is finished. Therefore, in a case where the total acquisition time length of the voiceprint data is shorter than the time required for the voiceprint verification, when the speaker selects not to register the voiceprint data, there is a problem with the communication device in that new voiceprint data cannot be stored.

As a method for registering the voiceprint data, there is a method for extracting only a voice of a speaker from communication voices between the speaker and an operator, and storing the extracted voice of the speaker as voiceprint data. In such a method for registering the voiceprint data, since the operator does not know a registration state of currently acquired and stored voiceprint data of the speaker in real time, there is a possibility that a response to a customer during a communication is delayed or the voiceprint data cannot be sufficiently acquired and registered during the call.

Therefore, in the following Embodiment 3, an example of an utterance voice registration device and an utterance voice registration method for notifying a current registration state of an utterance voice signal in real time and supporting a registration operation of the utterance voice signal performed by an operator will be described. In the following description, the same components as those in Embodiment 1 or Embodiment 2 are denoted by the same reference numerals, and thus the description thereof will be omitted.

### (Embodiment 3)

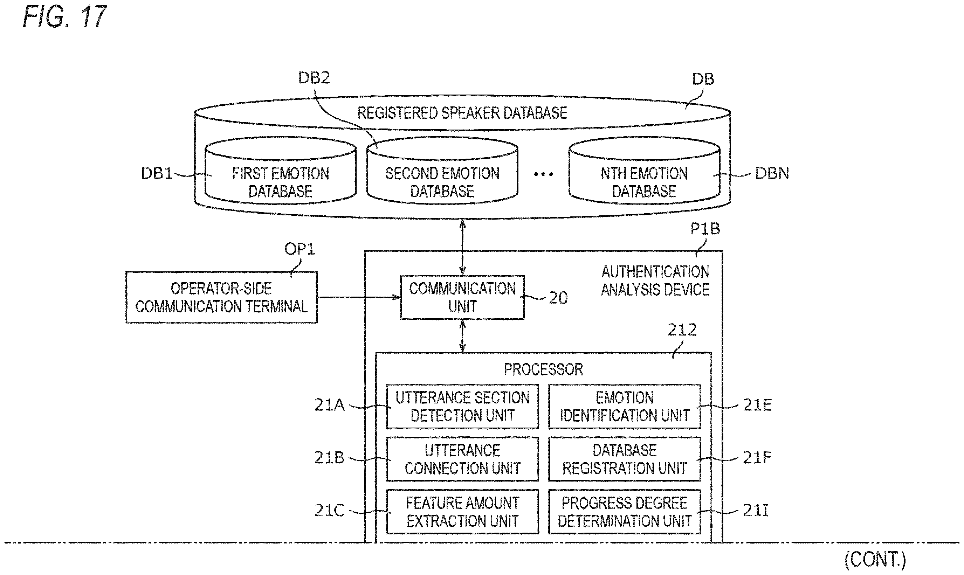

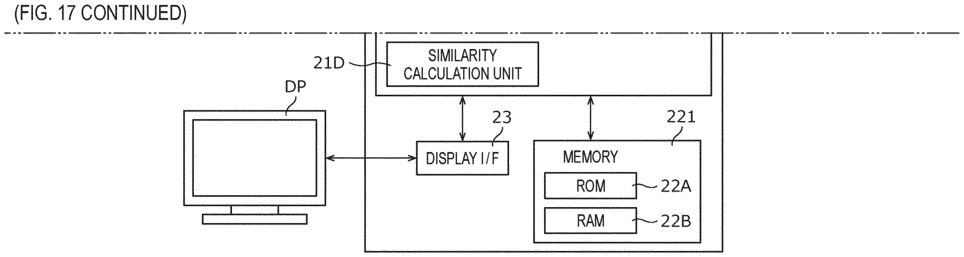

A block diagram illustrating an example of an internal configuration of an authentication analysis device P1B according to Embodiment 3 will be described with reference to Fig. 17. Fig. 17 is a block diagram illustrating the example of the internal configuration of the authentication analysis device P1B according to Embodiment 3.

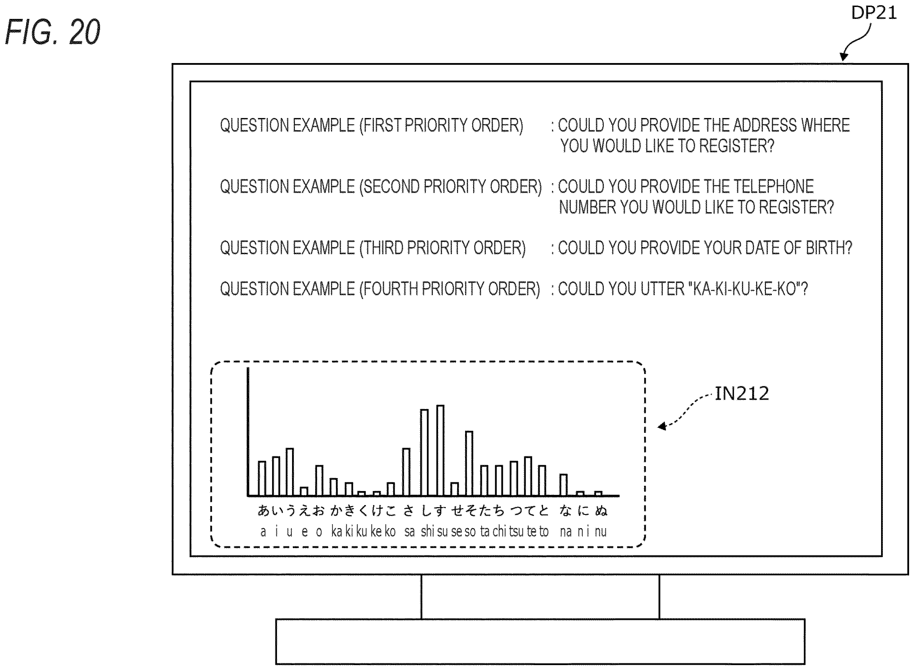

The authentication analysis device P1B according to Embodiment 3 is an example of a computer, and generates a question example to the user US for acquiring the number of sound types, an utterance length, and the like which are insufficient based on the number of sound types, an utterance length, and the like which are insufficient in an utterance uttered by the user US. The authentication analysis device P1B generates a screen DP21 (see Fig. 20) of the generated question example, progress notification screens DP22A, DP22B, or the like, and outputs the screen DP21, the progress notification screens DP22A, DP22B, or the like to the information display unit DP for display.

A processor 212 according to Embodiment 3 implements functions of the utterance section detection unit 21A, the utterance connection unit 21B, the feature amount extraction unit 21C, the similarity calculation unit 21D, the emotion identification unit 21E, the database registration unit 21F, a progress degree determination unit 21I.

The progress degree determination unit 21I determines a current progress degree based on the number of sound types, the utterance length, and the like which are insufficient in the utterance uttered by the user US. In a case where it is determined that the current progress degree (that is, a registration target data amount) of the registration processing of the utterance voice signal is not equal to or greater than the threshold value, the progress degree determination unit 21I generates a question example to the user US for acquiring the number of sound types, the utterance length, and the like which are insufficient based on the number of sound types, the utterance length, and the like which are insufficient in the plurality of utterance voice signals uttered by the user US.

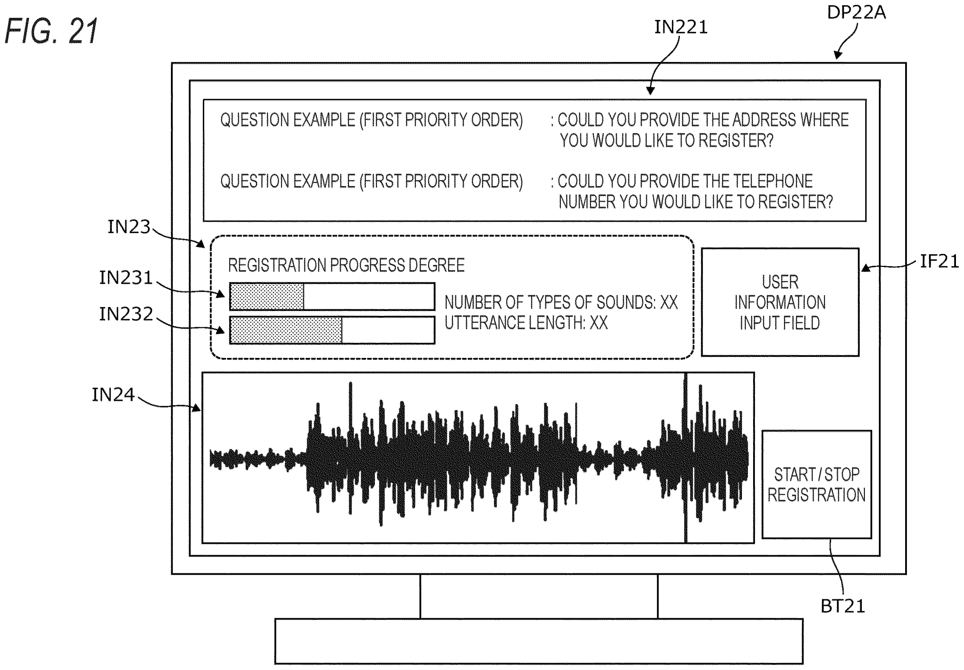

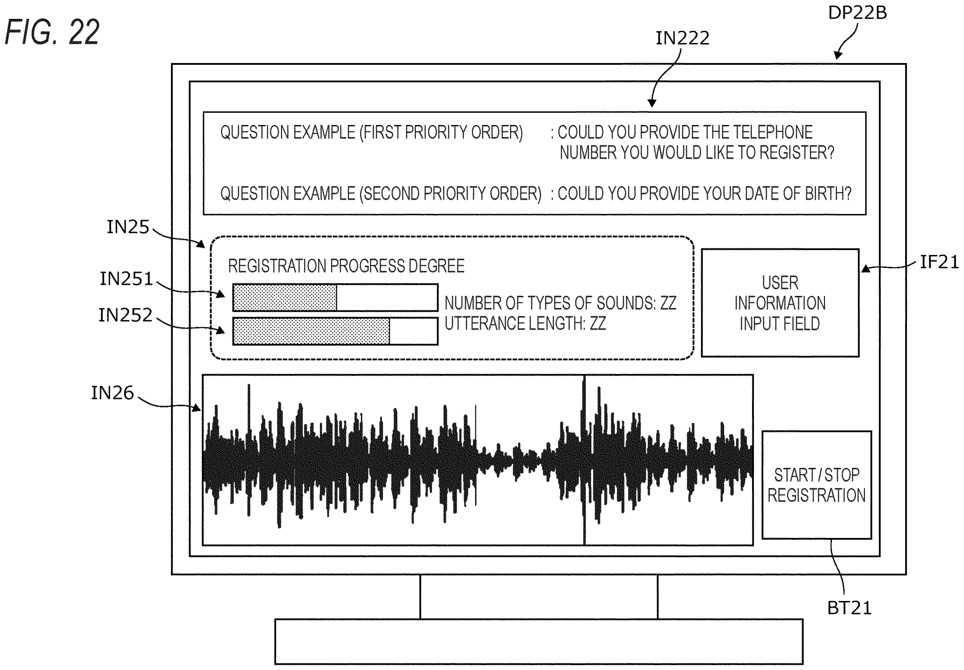

The progress degree determination unit 21I generates the progress notification screens DP22A and DP22B (see Figs. 21 and 22) for notifying the operator OP of the determined progress degree (in other words, a current registration state of the utterance voice signal) in real time, and outputs the progress notification screens DP22A and DP22B to the information display unit DP for display.

In a case where it is determined that the current progress degree (that is, the registration target data amount) of the registration processing of the utterance voice signal is not equal to or greater than the threshold value, the authentication analysis device P1B generates a question example to the user US for acquiring the number of sound types, the utterance length, and the like which are insufficient based on the number of sound types, the utterance length (signal length), and the like which are insufficient in the utterance uttered by the user US. The authentication analysis device P1B generates a screen DP21 (see Fig. 20) of the generated question example, progress notification screens DP22A, DP22B, or the like, and outputs the screen DP21, the progress notification screens DP22A, DP22B, or the like to the information display unit DP for display.

The memory 221 according to Embodiment 3 stores a plurality of question examples selected corresponding to the number of sound types, the utterance length, and the like which are insufficient.

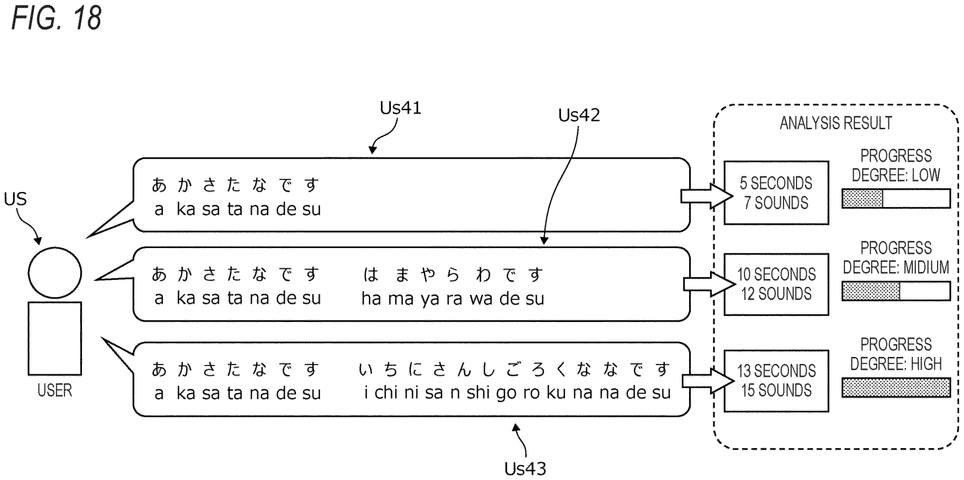

Next, progress degree determination processing executed by the progress degree determination unit 21I according to Embodiment 3 will be described with reference to Fig. 18. Fig. 18 is a diagram illustrating an example of the progress degree determination processing according to Embodiment 3.

In the example illustrated in Fig. 18, each of utterance voice signals Us41, Us42, and Us43 is an utterance voice signal of the user US, and indicates an utterance voice signal which is to be registered in the registered speaker database DB.

In a case where the utterance voice signal Us41 with the number of sound types = 7 and the utterance length = 5 seconds is currently registered, the progress degree determination unit 21I determines that the progress degree is "low". In addition, in a case where the utterance voice signal Us42 with the number of sound types = 12 and the utterance length = 10 seconds is currently registered, the progress degree determination unit 21I determines that the progress degree is "medium". Further, in a case where the utterance voice signal Us43 with the number of sound types = 15 and the utterance length = 13 seconds is currently registered, the progress degree determination unit 21I determines that the progress degree is "high". The progress degree determination unit 21I may evaluate the progress degree in percentage.

Here, the processor 212 may notify the operator OP of the progress degree by a voice output based on the progress degree determined by the progress degree determination unit 211. For example, the processor 212 outputs a predetermined notification sound only once in a case where the progress degree is "low", outputs the predetermined notification sound twice in a case where the progress degree is "medium", and outputs the predetermined notification sound three times in a case where the progress degree is "high". Accordingly, the operator OP can know a current progress degree based on the number of times the predetermined notification sound is emitted. The predetermined notification sound may be a voice message.

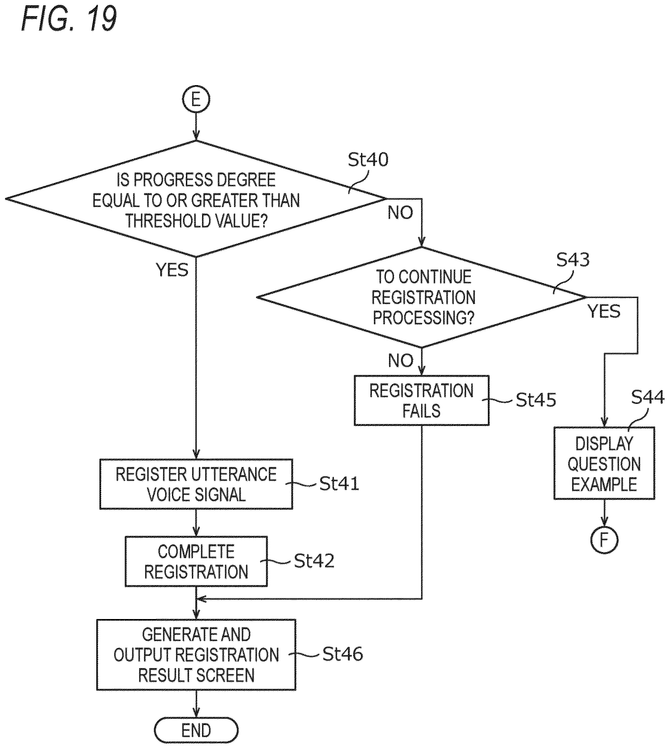

Next, an operation procedure of the authentication analysis device according to Embodiment 3 will be described with reference to Fig. 19. Fig. 19 is a flowchart illustrating an example of the operation procedure of the authentication analysis device P1B according to

### Embodiment 3.

The processor 212 determines whether the current progress degree is equal to or greater than a threshold value (St40).

In a case where it is determined in the process of step St40 that the current progress degree is equal to or greater than the threshold value (YES in St40), the processor 212 registers (stores) the utterance voice signal connected to each type of emotion and the acquired telephone number of the user-side communication terminal UP1 in an associated manner in each emotion database of the registered speaker database DB (St41), and completes the registration processing of the utterance voice signal (St42).

On the other hand, in a case where it is determined in the process of step St40 that the current progress degree is not equal to or greater than the threshold value (NO in St40), the processor 212 determines whether a control command of requesting to continue the registration processing is received (St43).

In a case where it is determined in the process of step St43 that the control command of requesting to continue the registration processing is received on the basis of a control command based on an operation of the operator OP transmitted from the operator-side communication terminal OP1 (YES in St43), the processor 212 selects at least one question example based on the number of sound types, the utterance length, and the like of the utterance voice signal which are currently insufficient. The processor 212 generates the question example screen DP21 (see Fig. 20) including the selected question example, the progress notification screens DP22A and DP22B (see Figs. 21 and 22), or the like, and outputs the question example screen DP21, the progress notification screens DP22A and DP22B, or the like to the information display unit DP for display (St44). The processor 212 proceeds to the process of step St15.

On the other hand, in a case where it is determined in the process of step St43 that the control command of requesting to continue the registration processing is not received (that is, a control command of requesting to stop or end the registration processing is received) on the basis of a control command based on an operation of the operator OP transmitted from the operator-side communication terminal OP1 (NO in St43), the processor 212 stops the registration processing of the acquired utterance voice signal in the registered speaker database DB (that is, the registration fails) (St45).

After the process of step St42 or step St45, the processor 212 generates a registration result screen (not illustrated) including a result of the registration processing of the utterance voice signal in the registered speaker database DB, and outputs the registration result screen to the information display unit DP for display (St46).

As described above, the authentication analysis device P1B according to Embodiment 3 can identify the utterance voice signal of the user US for each type of emotion and register (store) the utterance voice signal in the registered speaker database DB. Accordingly, the authentication analysis device P1B can support the operator OP by presenting, to the operator OP, a question example for acquiring the utterance voice signal including the number of sound types and the utterance length necessary for the user authentication as the registration target data amount, even in a case where variations are generated in the number of sound types and the utterance length included in the utterance voice signal due to the emotion of the user US during a communication.

The authentication analysis device P1B visualizes the determined progress degree to the operator OP in real time. Accordingly, the operator OP can know the registration state of the utterance voice signal in real time based on an answer to a question by the user US, and can more easily determine an end timing of the communication with the user US, whether to ask a next question, and the like.

Next, the question example screen DP21 will be described with reference to Fig. 20. Fig. 20 is a diagram illustrating an example of the question example screen DP21. The question example screen DP21 illustrated in Fig. 20 is an example and is not limited thereto. In addition, a sound type number graph IN212 illustrated in Fig. 20 is not essential and may be omitted.

The question example screen DP21 is generated and displayed on the information display unit DP in a case where the progress degree determination unit 21I determines that the current progress degree (that is, the registration target data amount) of the registration processing of the utterance voice signal is not equal to or greater than the threshold value.

The progress degree determination unit 21I analyzes the number of sound types, the utterance length (the signal length), and the like which are insufficient in the utterance uttered by the user US, and selects, based on an analysis result, at least one question example for acquiring the number of sound types, the utterance length, and the like which are insufficient as the utterance voice signal used for the user authentication processing. The progress degree determination unit 21I sets a priority order to each of at least one selected question example, generates a question example screen DP21 including the at least one question example and the priority order corresponding to the question example, and outputs the question example screen DP21 to the information display unit DP for display. Information on the priority order is not essential and may be omitted.

The question example screen DP21 in the example illustrated in Fig. 20 is generated to include four question examples and the sound type number graph IN212 indicating the number of sound types for each sound in the utterance uttered by the user US. The question example screen DP21 includes, in order from the top, a question example that "Could you provide the address where you would like to register?", which is a first priority order, a question example that "Could you provide the telephone number you would like to register?", which is a second priority order, a question example that "Could you provide your date of birth?", which is a third priority order, and a question example that "Could you utter "ka-ki-ku-ke-ko"?", which is a fourth priority order.

Accordingly, the operator OP can select any question among each of the four question examples on the question example screen DP21 to question the user US.

Accordingly, the authentication analysis device P1B according to Embodiment 3 can more efficiently acquire the number of sound types, the utterance length, and the like which are insufficient, and can acquire an utterance voice signal more suitable for the user authentication. In addition, the authentication analysis device P1B can support the operator OP such that the communication between the user US and the operator OP is not prolonged.

Next, a progress notification screen generated by the progress degree determination unit 21I according to Embodiment 3 will be described with reference to Figs. 21 and 22. Fig. 21 is a diagram illustrating an example of the progress notification screen DP22A of the user US. Fig. 22 is a diagram illustrating an example of the progress notification screen DP22B of the user US. Each of the progress notification screen DP22A illustrated in Fig. 21 and the progress notification screen DP22B illustrated in Fig. 22 is an example and is not limited thereto.

The progress notification screen DP22A is a screen for notifying the operator OP of the progress state of the registration processing of the utterance voice signal acquired from the user-side communication terminal UP1, and is generated by the processor 212 and displayed by the information display unit DP. In addition, in a case where the processor 212 determines that the progress degree is less than the threshold value, the progress notification screen DP22A is generated to further include a question example IN221 for acquiring the number of sound types and the utterance length which are insufficient. The progress notification screen DP22A illustrated in Fig. 21 includes the question example IN221, a registration name input field IF21, registration progress degree information IN23, a voice signal graph IN24, and a speaker registration button B T21.

The question example screen IN221 includes, in order from the top, a question example that "Could you provide the address where you would like to register?", which is a first priority order, and a question example that "Could you provide the telephone number you would like to register?", which is a second priority order.

In a case where any of the question examples displayed on the progress notification screen DP22A is selected (pressed) by an operation of the operator OP, the processor 212 may store the question example as a question example that is already asked. In a case where it is determined that the progress degree is less than the threshold value again, the processor 212 may select a question example to be presented to the operator OP from question examples other than the question example that is already asked among a plurality of question examples stored in memory 22.

The registration name input field IF21 is an input field capable of receiving an operator operation for a user name registered in the registered speaker database DB. The registration name input field IF21 may allow input of information related to the user US.

The registration progress degree information IN23 includes a progress degree IN231 indicating the number of sound types of a currently registered utterance voice signal with respect to the number of sound types of the registration target data amount, and a progress degree IN232 indicating an utterance length of the currently registered utterance voice signal with respect to the utterance length of the registration target data amount. In addition, the registration progress degree information IN23 may use numerical values such as "number of sound types: XX" to display the number of sound types of the currently registered utterance voice signal and "utterance length: XX" to display the utterance length thereof.

The voice signal graph IN24 displays an utterance voice signal of a detected utterance section.

The speaker registration button BT21 receives a start operation or a stop operation of the registration processing of the utterance voice signal in the registered speaker database DB by the operator OP. In a case where the start operation of registration processing the utterance voice signal in the registered speaker database DB is received by an operation of the operator OP, the speaker registration button BT21 registers the acquired utterance voice signal in the registered speaker database DB. In addition, in a case where the stop operation of the registration processing of the utterance voice signal in the registered speaker database DB is received by an operation of the operator OP, the speaker registration button BT21 stops the registration processing of the utterance voice signal in the registered speaker database DB.

The progress notification screen DP22B is generated by the processor 212 and displayed by the information display unit DP in a case where the processor 212 determines that the progress degree is less than the threshold value after the progress notification screen DP22A is displayed.

A question example screen IN222 is a newly generated question example, and includes, in order from the top, a question example that "Could you provide the telephone number you would like to register?", which is a first priority order, and a question example that "Could you provide your date of birth?", which is a second priority order.

Registration progress degree information IN25 includes a progress degree IN251 indicating the number of sound types of a currently registered utterance voice signal with respect to the number of sound types of the registration target data amount, and a progress degree IN252 indicating an utterance length of the currently registered utterance voice signal with respect to the utterance length of the registration target data amount. In addition, the registration progress degree information IN25 may use numerical values such as "number of sound types: ZZ" to display the number of sound types of the currently registered utterance voice signal and "utterance length: ZZ" to display the utterance length thereof.

A voice signal graph IN26 displays an utterance voice signal of a detected utterance section.

As described above, the authentication analysis device P1B according to Embodiment 3 includes the communication unit 20 (an example of the acquisition unit) that acquires the voice signal of the utterance voice of the speaker and the speaker information capable of identifying the speaker, the database registration unit 21F (an example of the registration unit) that registers the acquired voice signal and the speaker information in an associated manner in the registered speaker database DB (an example of the database), the progress degree determination unit 21I that repeatedly determines the progress degree (an example of the registration progress degree) of the voice signal registered in the registered speaker database DB with respect to the registration target data amount (an example of the registration target amount) of the voice signal registered in the registered speaker database DB, and the processor 212 (an example of a notification unit) that notifies the determined progress degree.

Accordingly, the authentication analysis device P1B according to Embodiment 3 visualizes the determined progress degree to the operator OP in real time. Accordingly, the operator OP can know the registration state of the utterance voice signal in real time based on an answer to a question by the user US, and can more easily determine an end timing of the communication with the user US, whether to ask a next question, and the like.

As described above, the progress degree determination unit 21I in the authentication analysis device P1B according to Embodiment 3 repeatedly determines the progress degree of the voice signal registered in the registered speaker database DB and the number of sound types included in the registered voice signal. The processor 212 notifies the progress degree and the number of sound types. Accordingly, the authentication analysis device P1B according to Embodiment 3 visualizes the determined progress degree to the operator OP in real time. Accordingly, the operator OP can know the registration state (a progress degree and the number of sound types) of the utterance voice signal in real time based on an answer to a question by the user US, and can more easily determine an end timing of the communication with the user US, whether to ask a next question, and the like.

As described above, the progress degree determination unit 21I in the authentication analysis device P1B according to Embodiment 3 determines the number of sound types (for example, the sound type number graph IN212 illustrated in Fig. 20) for each sound included in the voice signal registered in the registered speaker database DB. The processor 212 notifies the number of sound types for each sound. Accordingly, the authentication analysis device P1B according to Embodiment 3 can visualize the number of sound types for each sound, which is the registration state of the utterance voice signal, and notify the operator OP of the visualized number of sound types.

As described above, the progress degree determination unit 21I in the authentication analysis device P1B according to Embodiment 3 repeatedly determines the progress degree of the voice signal registered in the registered speaker database DB and the signal length of the registered voice signal. The processor 212 notifies the progress degree and the signal length. Accordingly, the authentication analysis device P1B according to Embodiment 3 visualizes the determined progress degree to the operator OP in real time. Accordingly, the operator OP can know the registration state (a progress degree and an utterance length (a signal length)) of the utterance voice signal in real time based on an answer to a question by the user US, and can more easily determine an end timing of the communication with the user US, whether to ask a next question, and the like.

As described above, the authentication analysis device P1B according to Embodiment 3 further includes the processor 212 (an example of a selection unit) that selects at least one question to the user US based on the progress degree. The processor 212 generates and outputs the progress notification screens DP22A and DP22B (see Figs. 21 and 22) including the selected question and the progress degree. Accordingly, the authentication analysis device P1B according to Embodiment 3 can acquire the utterance voice signal more suitable for the user authentication based on the progress degree.

As described above, the progress degree determination unit 21I in the authentication analysis device P1B according to Embodiment 3 repeatedly determines the progress degree of the voice signal registered in the registered speaker database DB and the number of sound types included in the registered voice signal. The processor 212 selects a question based on the number of sound types of the registration target data amount and the number of sound types included in the registered voice signal. Accordingly, the authentication analysis device P1B according to Embodiment 3 can more efficiently acquire the number of sound types which is insufficient, and can acquire the utterance voice signal more suitable for the user authentication.

As described above, the processor 212 in the authentication analysis device P1B according to Embodiment 3 selects a plurality of questions based on the number of sound types of the registration target data amount and the number of sound types included in the registered voice signal, and determines the priority order of each of the selected questions. The processor 212 generates and outputs the progress notification screens DP22A and DP22B (see Figs. 21 and 22) including each of the selected plurality of questions, the priority order of the question, and the progress degree. Accordingly, the authentication analysis device P1B according to Embodiment 3 more efficiently acquires the number of sound types which is insufficient and visualizes, to the operator OP in the priority order, a question example in which the utterance voice signal more suitable for the user authentication can be acquired.

As described above, the progress degree determination unit 21I in the authentication analysis device P1B according to Embodiment 3 repeatedly determines the progress degree of the voice signal registered in the registered speaker database DB and the signal length included in the registered voice signal. The processor 212 selects a question based on the signal length of the registration target data amount and the signal length included in the registered voice signal. Accordingly, the authentication analysis device P1B according to Embodiment 3 selects a question based on the signal length (the utterance length) of the registration target data amount and the signal length (the utterance length) included in the registered voice signal. Accordingly, the authentication analysis device P1B according to Embodiment 3 can more efficiently acquire the utterance length which is insufficient, and can acquire the utterance voice signal more suitable for the user authentication.

As described above, the processor 212 in the authentication analysis device P1B according to Embodiment 3 generates and outputs the progress notification screens DP22A and DP22B (see Figs. 21 and 22) including the progress degree. Accordingly, the authentication analysis device P1B according to Embodiment 3 visualizes the determined progress degree to the operator OP in real time. Accordingly, the operator OP can know the registration state of the utterance voice signal in real time based on an answer to a question by the user US, and can more easily determine an end timing of the communication with the user US, whether to ask a next question, and the like.

As described above, the processor 212 in the authentication analysis device P1B according to Embodiment 3 generates and outputs a voice notification signal that notifies the progress degree by voice. Accordingly, the authentication analysis device P1B according to Embodiment 3 can notify the operator OP of the determined progress degree in real time. Accordingly, the operator OP can know the registration state of the utterance voice signal in real time based on an answer to a question by the user US, and can more easily determine an end timing of the communication with the user US, whether to ask a next question, and the like.

Although various embodiments are described above with reference to the drawings, it is needless to say that the present disclosure is not limited to such examples. It is apparent to those skilled in the art that various modifications, corrections, substitutions, additions, deletions, and equivalents can be conceived within the scope described in the claims, and it is understood that such modifications, corrections, substitutions, additions, deletions, and equivalents also fall within the technical scope of the present disclosure. In addition, components in the various embodiments described above may be combined freely in a range without deviating from the spirit of the invention.

The present application is based on Japanese Patent Application No. 2021-197226 filed on December 3, 2021, and the contents thereof are incorporated herein by reference.

### INDUSTRIAL APPLICABILITY

The present disclosure is useful as a voice registration device and a voice registration method for collecting an utterance voice for further improving authentication accuracy of voice authentication using the utterance voice.

### REFERENCE SIGNS LIST

20: communication unit
210, 211, 212: processor
21A: utterance section detection unit
21B: utterance connection unit
21C: feature amount extraction unit
21D: similarity calculation unit
21E: emotion identification unit
21F: database registration unit
21G, 211: progress degree determination unit
22: memory
22A: ROM
22B: RAM
23: display I/F
100: voice authentication system
DB: registered speaker database
DB1: first emotion database
DB2: second emotion database
DBN: Nth emotion database
DP: information display unit
DP22A, DP22B: progress notification screen
OP1: operator-side communication terminal
P1: authentication analysis device
SC: authentication result screen
US: user
UP1: user-side communication terminal

## Claims

1. A voice registration device comprising:
an acquisition unit that acquires a voice signal of an utterance voice of a speaker,
an emotion identification unit that identifies at least one type of emotion of the speaker included in the voice signal, and
a registration unit that registers a voice signal for the each type of emotion in a database based on an identification result by the emotion identification unit.

2. The voice registration device according to claim 1, wherein
the database includes a plurality of emotion databases respectively corresponding to the emotion, and
the registration unit registers the voice signal for the each type of emotion in an emotion database corresponding to the emotion.

3. The voice registration device according to claim 2, wherein
the acquisition unit acquires the utterance voice and speaker information capable of identifying the speaker of the utterance voice, and
the registration unit registers the voice signal for the each type of emotion and the speaker information in an associated manner in an emotion database corresponding to the emotion.

4. The voice registration device according to claim 3, wherein
the registration unit updates, in a case where it is determined that there is speaker information identical to the acquired speaker information among the speaker information registered in the emotion database, a voice signal of the identical speaker information already registered in the emotion database to the voice signal identified for the each type of emotion.

5. The voice registration device according to claim 4, further comprising:
a similarity calculation unit that calculates, in a case where it is determined that there is speaker information identical to the acquired speaker information among the speaker information registered in the emotion database by the registration unit, similarity between the voice signal of the identical speaker information and the acquired voice signal, wherein
the registration unit updates the voice signal already registered in the emotion database to the identified voice signal in a case where it is determined that the calculated similarity is equal to or greater than a threshold value.

6. The voice registration device according to claim 5, wherein
the registration unit omits update of the voice signal already registered in the emotion database in a case where it is determined that the calculated similarity is not equal to or greater than the threshold value.

7. The voice registration device according to claim 4, wherein
the registration unit registers, in a case where it is determined that there is no speaker information identical to the acquired speaker information among the speaker information registered in the emotion database, the voice signal identified for the each type of emotion in the corresponding emotion database.

8. The voice registration device according to claim 1, further comprising:
a conversion unit that converts the voice signal acquired by the acquisition unit to have a predetermined utterance rate, wherein
the emotion identification unit identifies the emotion using a voice signal converted to have the predetermined utterance rate.

9. The voice registration device according to claim 3, wherein
the speaker information is a telephone number of a voice collecting device that collects the utterance voice.

10. A voice registration method executed by one or more computers, the voice registration method comprising:
acquiring a voice signal of an utterance voice of a speaker;
identifying at least one type of emotion of the speaker included in the voice signal; and
registering a voice signal for the each type of emotion in a database based on an identification result of the emotion.
